# EUROPEAN PATENT APPLICATION

(11) **EP 4 521 221 A1**
(43) Date of publication of application: **12.03.2025**
(21) Application number: 24740000.5
(22) Date of filing: 12.07.2024
(51) Int. Cl.: G06F 3/0484

(54) **ELECTRONIC DEVICE FOR COMMUNICATING WITH EXTERNAL ELECTRONIC DEVICE AND CONTROL METHOD THEREOF**

(30) Priority: 20.07.2023 KR 20230094283; 26.09.2023 KR 20230129775
(71) Applicant: Samsung Electronics Co., Ltd, Suwon-si, Gyeonggi-do 16677 (KR)
(72) Inventor: LEE, Nina, Suwon-si, Gyeonggi-do 16677 (KR); LEE, Jiwoo, Suwon-si, Gyeonggi-do 16677 (KR); OK, Joonho, Suwon-si, Gyeonggi-do 16677 (KR); LIM, Yeunwook, Suwon-si, Gyeonggi-do 16677 (KR)
(74) Representative: HGF
(86) International application number: PCT/KR2024/009988
(87) International publication number: WO 2025/018717

(57) **Abstract**

An electronic device is disclosed. An electronic device according to the disclosure may comprise a first housing and a second housing, a hinge rotatably connecting the first housing and the second housing, a flexible display exposed through a first portion of the first housing and a second portion of the second housing, at least one sensor, a camera, a communication module, memory storing instructions, and at least one processor. The instructions may, when executed by the processor, cause the electronic device to execute a first application for controlling the camera, identify a folding angle of the electronic device through the at least one sensor, and transmit, to an external electronic device, a command for displaying an icon related to the first application on a display of the external electronic device connected through the communication module, based on the folding angle being included in a designated range not being 0 degrees and 180 degrees, in a state in which the first application is executed.

## Description

### [Technical Field]

Various embodiments of the disclosure relate to an electronic device for communicating with an external electronic device and a method for controlling the same.

### [Background Art]

More and more services and additional functions are being provided through electronic devices, e.g., smartphones, or other portable electronic devices. To meet the needs of various users and raise efficiency of electronic devices, communication service carriers or device manufacturers are competing to develop electronic devices with differentiated and diversified functionalities. Accordingly, various functions that are provided through electronic devices are evolving more and more.

As electronic devices are highly integrated, and high-speed or high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services. Accordingly, a foldable flexible display may be disposed on the entire area of the housing structure separated to be foldable.

### [Disclosure of Invention]

### [Solution to Problems]

According to an embodiment, an electronic device may comprise a first housing and a second housing, a hinge rotatably connecting the first housing and the second housing, a flexible display exposed through a first portion of the first housing and a second portion of the second housing, at least one sensor, a camera, a communication module, memory storing instructions, and a processor.

According to an embodiment, the instructions may, when executed by the processor, cause the electronic device to execute a first application for controlling the camera.

According to an embodiment, the at least one processor may identify a folding angle of the electronic device through the at least one sensor.

According to an embodiment, the instructions may, when executed by the processor to cause the electronic device to transmit, to an external electronic device, a command for displaying an icon related to the first application on a display of the external electronic device connected through the communication module, based on not detecting a movement of the electronic device during a set time after the folding angle is included in a designated range in a state in which the first application is executed. According to an embodiment, the designated range may be set to differ for each electronic device and may be a folding angle range to which operations of the disclosure are applied.

According to an embodiment, a wearable electronic device may comprise a communication module, a display, memory storing instructions, and a processor.

According to an embodiment, the instructions may, when executed by the processor, cause the wearable electronic device to display a home screen or an execution screen of a first application.

According to an embodiment, the instructions may, when executed by the processor, cause the wearable electronic device to display an icon related to a second application related to a camera of an external electronic device as a upper layer of the home screen or the execution screen of the first application, based on receiving a command for displaying the icon from the external electronic device connected through the communication module.

According to an embodiment, a method for controlling an electronic device may comprise executing a first application for controlling a camera of the electronic device.

According to an embodiment, the method for controlling the electronic device may comprise identifying a folding angle of the electronic device through at least one sensor of the electronic device.

According to an embodiment, the method for controlling the electronic device may comprise transmitting, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.

According to an embodiment, a method for controlling a wearable electronic device may comprise displaying a home screen or an execution screen of a first application.

According to an embodiment, the method for controlling the wearable electronic device may comprise displaying an icon related to a second application related to a camera of an external electronic device as an upper layer of the home screen or the execution screen of the first application, based on receiving a command for displaying the icon from the external electronic device connected through the communication module.

According to an embodiment, in a non-transitory computer-readable recording medium storing one or more programs, the one or more programs may include instructions enabling an electronic device to execute a first application for controlling a camera of the electronic device.

According to an embodiment, the one or more programs may include instructions enabling the electronic device to identify a folding angle of the electronic device through at least one sensor of the electronic device.

According to an embodiment, the one or more programs may include instructions enabling the electronic device to transmit, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.

According to an embodiment, in a non-transitory computer-readable recording medium storing one or more programs, the one or more programs may include instructions enabling a wearable electronic device to a home screen or an execution screen of a first application.

According to an embodiment, the one or more programs may include instructions enabling the wearable electronic device to display an icon related to a second application related to a camera of an external electronic device as an upper layer of the home screen or the execution screen of the first application, based on receiving a command for displaying the icon from the external electronic device connected through the communication module.

### [Brief Description of Drawings]

FIG. 1 is a block diagram illustrating an electronic device in a network environment according to an embodiment;
FIG. 2 is an example view illustrating an unfolded state of an electronic device (e.g., the electronic device 101 of FIG. 1) according to an embodiment;
FIG. 3A is an example view illustrating a folded state of the electronic device of FIG. 2;
FIG. 3B is a view illustrating a folded state of an electronic device according to an embodiment;
FIG. 4 illustrates at least two housings of an electronic device according to an embodiment;
FIG. 5 is a front perspective view illustrating an electronic device according to an embodiment;
FIG. 6 is a rear perspective view illustrating the electronic device of FIG. 5;
FIG. 7 is an exploded perspective view illustrating the electronic device of FIG. 5;
FIG. 8 is a flowchart illustrating an operation of transmitting a command for displaying an icon on an external electronic device based on a folding state and whether an application of an electronic device is executed according to an embodiment;
FIG. 9A is a view illustrating an operation of an electronic device according to a folding angle when the electronic device which is a foldable device is unfolded according to an embodiment;
FIG. 9B is a view illustrating an operation of an electronic device according to a folding angle when the electronic device which is a foldable device is folded according to an embodiment;
FIG. 10 is a view illustrating an operation of an external electronic device based on a folding state and whether an application of an electronic device is executed according to an embodiment;
FIG. 11A is a flowchart illustrating an operation of an external electronic device based on a folding state and whether an application of an electronic device is executed according to an embodiment;
FIG. 11B is a flowchart illustrating an operation of an external electronic device based on a folding state and whether an application of an electronic device is executed according to an embodiment;
FIG. 11C is a view illustrating an operation of an external electronic device based on a folding state and whether an application of an electronic device is executed according to an embodiment;
FIG. 12A is a flowchart illustrating an operation of an external electronic device based on a folding state and whether an application of an electronic device is executed according to an embodiment;
FIG. 12B is a flowchart illustrating an operation of an external electronic device based on a folding state and whether an application of an electronic device is executed according to an embodiment;
FIG. 12C is a view illustrating an operation of an external electronic device based on a folding state and whether an application of an electronic device is executed according to an embodiment;
FIG. 13A is a flowchart illustrating an operation of an external electronic device based on a control operation of an application in an electronic device in a state in which an icon for executing an application is displayed on the external electronic device according to an embodiment;
FIG. 13B is a view illustrating an operation of an external electronic device based on a control operation of an application in an electronic device in a state in which an icon for executing an application is displayed on the external electronic device according to an embodiment;
FIG. 14 is a view illustrating an operation of performing a function based on a user input received through an icon for executing an application, by a wearable electronic device according to an embodiment;
FIG. 15 is a view illustrating an operation of performing a function based on a user input received through an icon for executing an application, by a wearable electronic device according to an embodiment;
FIG. 16A is a view illustrating an operation of performing a function based on bezel rotation in a state in which an icon for executing an application is displayed, by a wearable electronic device according to an embodiment;
FIG. 16B is a view illustrating an operation of performing a function based on bezel rotation in a state in which an icon for executing an application is displayed, by a wearable electronic device according to an embodiment;
FIG. 16C is a view illustrating an operation of performing a function based on bezel rotation in a state in which an icon for executing an application is displayed, by a wearable electronic device according to an embodiment;
FIG. 17 is a view illustrating an operation of performing a function based on bezel rotation in a state in which an icon for executing an application is displayed, by a wearable electronic device according to an embodiment;
FIG. 18 is a view illustrating an operation of performing a function based on bezel rotation in a state in which an icon for executing an application is displayed, by a wearable electronic device according to an embodiment;
FIG. 19 is a view illustrating an operation of performing a function based on bezel rotation in a state in which an icon for executing an application is displayed, by a wearable electronic device according to an embodiment;
FIG. 20 is a view illustrating an operation of performing a function based on bezel rotation in a state in which an icon for executing an application is displayed, by a wearable electronic device according to an embodiment;
FIG. 21A is a view illustrating an operation of performing a function based on a user input received through an icon for executing an application, by a wearable electronic device according to an embodiment;
FIG. 21B is a view illustrating an operation of performing a function based on a user input received through an icon for executing an application, by a wearable electronic device according to an embodiment;
FIG. 21C is a view illustrating an operation of performing a function based on bezel rotation in a state in which an icon for executing an application is displayed, by a wearable electronic device according to an embodiment;
FIG. 21D is a view illustrating an operation of performing a function based on bezel rotation in a state in which an icon for executing an application is displayed, by a wearable electronic device according to an embodiment; and
FIG. 21E is a view illustrating an operation of performing a function based on bezel rotation in a state in which an icon for executing an application is displayed, by a wearable electronic device according to an embodiment.

### [Mode for the Invention]

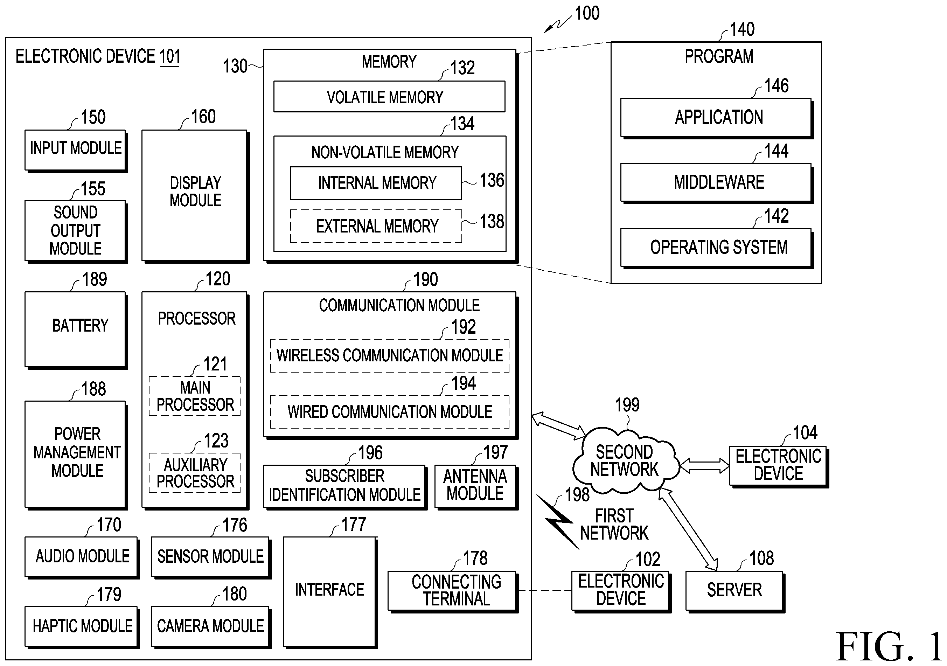

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. **In** an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a **HDMI** connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

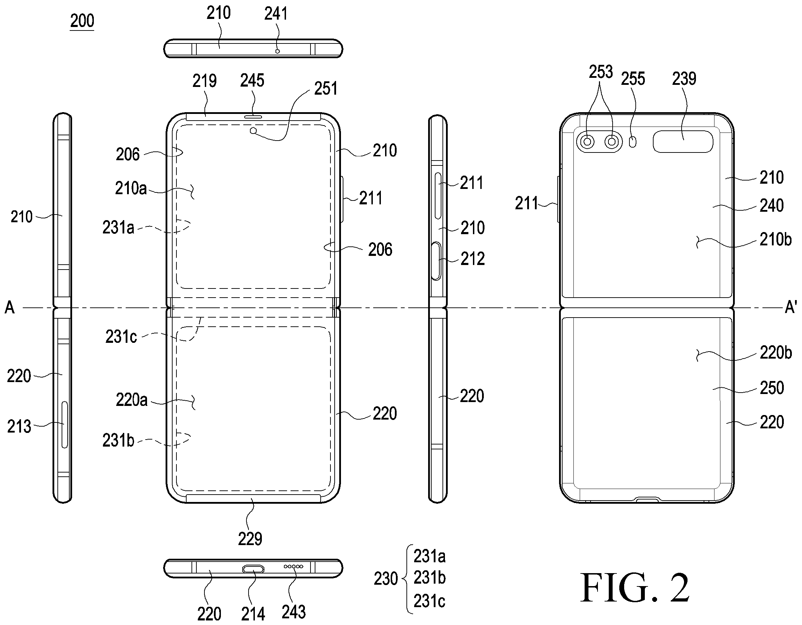

FIG. 2 is an example view illustrating an unfolded state of a foldable-type electronic device 200 according to an embodiment.

Referring to FIG. 2, an electronic device 200 according to an embodiment may be a foldable type which is foldable or unfoldable and may include a first housing 210, a second housing 220, and a flexible or foldable display 230 (hereinafter, simply referred to as a "display 230") (e.g., the display module 160 of FIG. 1) disposed in a space provided by the first housing 210 and the second housing 220.

According to an embodiment, the surface on which the display 230 is disposed may be defined as a front surface of the electronic device 200. At least a portion of the front surface of the foldable device 200 may have a substantially transparent front plate (e.g., a glass plate or polymer plate including various coat layers). The opposite surface to the front surface may be defined as a rear surface of the foldable device 200. The rear of the foldable device 200 may be formed by a substantially opaque rear plate (hereinafter, referred to as a 'rear cover'). The rear cover may be formed of, e.g., laminated or colored glass, ceramic, polymer, metal (e.g., aluminum, stainless steel (STS), or magnesium), or a combination of at least two thereof. The surface surrounding the space between the front and rear surfaces may be defined as a side surface of the foldable device 200. The side surface may be formed by a side bezel structure (or a "side member") that couples to the front plate and the rear plate and includes a metal and/or polymer. **In** an embodiment, the rear cover and the side bezel plate may be integrally formed together and include the same material (e.g., a metal, such as aluminum).

The foldable device 200 according to an embodiment may include at least one or more of a display 230, a microphone hole 241, speaker holes 243 and 245, a sensor module 255, a camera module 253, key input devices 211, 212, and 213, and a connector hole 214. According to an embodiment, the foldable device 200 may omit at least one (e.g., the key input devices 211, 212, 213) of the components or additionally include another component (e.g., a light emitting device).

According to an embodiment, the display 230 may be a display at least a portion of which may be transformed into a flat or curved surface. According to an embodiment, the display 230 may include a folding area 231c, a first area 231a disposed on one side of the folding area 203 (e.g., an upper side of the folding area 231c of FIG. 2), and a second area 231b disposed on the opposite side of the folding area 231c (e.g., a lower side of the folding area 231c of FIG. 2). However, the segmentation of the display 230 as shown in FIG. 2 is merely an example, and the display 230 may be divided into a plurality of (e.g., four or more, or two) areas depending on the structure or function of the display 200. For example, in the embodiment illustrated in FIG. 2, the display 200 may be divided into the areas by the folding area 231c or folding axis A but, in another embodiment, the display 200 may be divided into the areas with respect to another folding area 231c or another folding axis (e.g., a folding axis perpendicular to the folding axis A).

According to an embodiment, the microphone hole 241 may have a microphone inside to obtain external sounds. In an embodiment, there may be a plurality of microphones to be able to detect the direction of a sound. The speaker holes 243 and 245 may include an external speaker hole 243 and a phone receiver hole 245. In an embodiment, the speaker holes 243 and 245 and the microphone hole 241 may be implemented as a single hole, or speakers may be rested without the speaker holes 243 and 245 (e.g., piezo speakers). Various changes may be made to the position and number of microphone holes 241 and speaker holes 243 and 245 according to an embodiment.

According to an embodiment, the camera module 253 may include a first camera device 251 disposed on the first surface 210a of the first housing 210 of the foldable device 200 and a second camera device 253 disposed on the second surface 210b. Further, the foldable device 200 may further include a flash (not shown). The camera devices 251 and 253 may include one or more lenses, an image sensor, and/or an image signal processor. The flash (not shown) may include, e.g., a light emitting diode (LED) or a xenon lamp.

According to an embodiment, the sensor modules 255 may generate an electrical signal or data value corresponding to an internal operating state or external environmental state of the foldable device 200. Although not shown in the drawings, the foldable device 200 may additionally or alternatively include a sensor module (e.g., the sensor module 176 of FIG. 1) other than the sensor module 255 provided on the second surface 210b of the first housing 210. The foldable device 200 according to an embodiment may further include at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, an angle sensor, or an illuminance sensor, as the sensor module. In a folded state of the foldable device 200, the foldable device 200 according to an embodiment may distinguish the upper surface and the lower surface of the foldable device using data obtained by the gyro sensor. For example, if the data obtained by the gyro sensor is substantially changed from data at a specific time, the foldable device 200 according to an embodiment may determine that the surface where the gyro sensor is provided is the upper surface. In contrast, if the data obtained by the gyro sensor is not substantially changed from the data at the specific time, the foldable device 200 according to an embodiment may determine that the surface where the gyro sensor is provided is the lower surface. The foldable device 200 according to an embodiment may determine the folding angle of the foldable device 200 through an angle sensor disposed around the folding axis A. However, according to various embodiments, various techniques for determining the folding angle of the foldable device 200 may be applied to embodiments of the disclosure.

According to an embodiment, the key input devices 211, 212, and 213 may be disposed on a side surface of the foldable housing (e.g., the first housing 210 or the second housing 220). According to another embodiment, the electronic device 200 may exclude all or some of the above-mentioned key input devices 211, 212, and 213 and the excluded key input devices may be implemented in other forms, e.g., as soft keys, on the display 230. In an embodiment, the key input device may be configured to implement key input by a sensor module (e.g., a gesture sensor).

According to an embodiment, the connector hole 214 may be configured to receive a connector (e.g., a USB connector) for transmitting/receiving power and/or data to/from an external electronic device or, additionally or alternatively, a connector for transmitting/receiving audio signals to/from an external electronic device.

According to an embodiment, a foldable housing may be implemented by a combination of the first housing 210, the second housing 220, the first rear cover 240, the second rear cover 250, and the hinge module. According to an embodiment, the foldable housing of the foldable device 200 is not limited to the shape and coupling shown in FIG. 2 but may rather be implemented in other shapes or via a combination and/or coupling of other components. For example, in another embodiment, the first housing 210 and the first rear cover 240 may be integrally formed with each other, and the second housing 220 and the second rear cover 250 may be integrally formed with each other. According to various embodiments of the disclosure, 'housing' may mean a combination of other various components not mentioned and/or a combined configuration thereof. For example, it may be described that a first area 231a of the display 230 forms one surface of the first housing 210 and, in another embodiment, the first area 231a of the display 230 is disposed or attached to one surface of the first housing 210.

According to an embodiment, the first housing 210 may be connected to a hinge structure and may include a first surface 210a facing in a first direction and a second surface 210b facing in a second direction opposite to the first direction. The second housing 220 may be connected to the hinge structure and may include a third surface 220a facing in a third direction and a fourth surface 220b facing in a fourth direction opposite to the third direction and may be rotated or pivoted from the first housing 210 around the hinge structure (or folding axis A).

According to an embodiment, the first housing 210 and the second housing 220 may be disposed on two opposite sides (or upper/lower sides) of the folding axis A and may overall have a symmetrical shape with respect to the folding axis A. The angle or distance between the first housing 210 and the second housing 220 may be varied depending on whether the electronic device 200 is in the unfolded state (or fully open state), the folded state (or fully closed state), or the partially unfolded (or partially folded) intermediate state (partially open state or partially closed state). According to an embodiment, the first housing 210 may further include various sensors unlike the second housing 220 but, in the remaining area, the first housing 210 and the second housing 220 may have symmetrical shapes with each other.

According to an embodiment, the first housing 210 and the second housing 220 may at least partially be formed of a metal or non-metallic material with a rigidity selected to support the display 230. The at least a portion formed of the metal material may be provided as a ground plane or radiating conductor of the foldable device 200 and, if provided as the ground plane, it may be electrically connected with a ground line formed on the printed circuit board.

According to an embodiment, the first rear cover 240 may be disposed on one side (e.g., the upper side in FIG. 2) of the folding axis A, on the rear surface of the foldable device 200, e.g., it may have a substantially rectangular periphery which may be surrounded by the first housing 210 (and/or the side bezel structure). Similarly, the second rear cover 250 may be disposed on the opposite side (e.g., the lower side in FIG. 2) of the folding axis A on the rear surface of the foldable device 200 and its periphery may be surrounded by the second housing 220 (and/or the side bezel structure).

According to an embodiment, the first rear cover 240 and the second rear cover 250 may be substantially symmetrical in shape with respect to the folding axis A. However, the first rear cover 240 and the second rear cover 250 are not necessarily symmetrical in shape. **In** another embodiment, the foldable device 200 may include the first rear cover 240 and the second rear cover 250 in various shapes. **In** another embodiment, the first rear cover 240 may be integrally formed with the first housing 210, and the second rear cover 250 may be integrally formed with the second housing 220.

According to an embodiment, the first rear cover 240, the second rear cover 250, the first housing 210, and the second housing 220 may form a space where various components of the foldable device 200 may be disposed. According to an embodiment, one or more components may be arranged or visually exposed on/through the rear surface of the foldable device 200. For example, at least a portion of a sub display 239 may be visually exposed through the first rear cover 240. In another embodiment, one or more components or sensors may be visually exposed through the first rear cover 240. According to various embodiments, the components or sensors may include a proximity sensor, a rear camera, and/or a flash. Although not separately shown in the drawings, one or more other components or sensors may be visually exposed through the second rear cover 250.

According to an embodiment, the front camera 251 exposed from the front surface of the foldable device 200 through one or more openings or the rear camera 253 exposed through the first rear cover 240 may include one or more lenses, an image sensor, and/or an image signal processor. The flash (not shown) may include, e.g., a light emitting diode (LED) or a xenon lamp. In an embodiment, two or more lenses (an infrared (IR) camera, a wide-angle lens, and a telescopic lens) and image sensors may be disposed on one surface of the foldable device 200.

According to an embodiment, the foldable device 200 may transform to a folded status or an unfolded status.

For example, the first housing 210 and the second housing 220 may be pivoted about each other between a first position, in which they face each other, and a second position (e.g., the status shown in FIG. 2) unfolded from the first position by a designated angle. FIG. 2 exemplifies an unfolded state of the first housing 210 and the second housing 220 which form about 180 degrees therebetween. In the folded state, e.g., the first position, the first area 231a and the second area 231b of the display 230 are positioned to face each other, and the folding area 231c may be deformed into a curved shape.

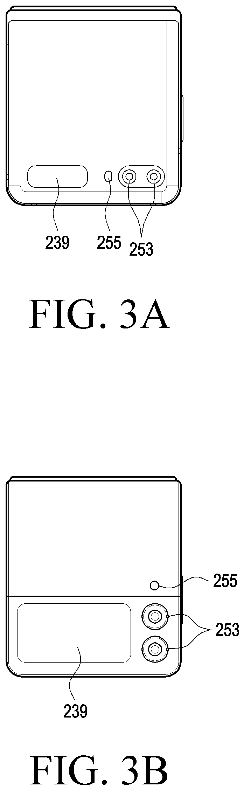

According to an embodiment, the foldable device 200 may be implemented as two types, 'in-folding" in which the first area 231a and the second area 231b are folded to face each other, and 'out-folding' in which the first area 231a and the second area 231b are folded in face in opposite directions. For example, in the in-folding folded state, the first area 231a and the second area 231b may be substantially hidden and, in the fully unfolded state, the first area 231a and the second area 231b may be disposed to face substantially in the same direction. As another example, in the out-folding folded state, the first area 231a and the second area 231b are disposed to face in opposite directions, exposed to the outside and, in the fully unfolded state, the first area 231a and the second area 231b may be disposed to face substantially in the same direction. According to an embodiment, the folded state is described with reference to FIGS. 3A and 3B.

According to an embodiment, the display 230 may include a display panel and a window member and may be formed of a flexible material. Although not separately shown, it will be appreciated by one of ordinary skill in the art that the display 230 or display panel includes various layers, such as a light emitting layer, a substrate(s) for encapsulating the light emitting layer, an electrode or wiring layer, and/or adhesive layer(s) for bonding different layers. According to an embodiment, when the display 230 (e.g., the folding area 231c) is deformed into a flat or curved shape, a relative displacement may occur between the layers constituting the display 230. The relative displacement due to the deformation of the display 230 may increase as it is farther away from the folding axis A and/or as the thickness of the display 230 increases.

According to an embodiment, the window member may serve as a protection film for protecting the display panel. As a protection film, a thin film plate may be formed of a material that protects the display panel from external impact, is robust against scratches, and causes fewer creases in the folding area 231c when the housings 210 and 220 are repeatedly folded and unfolded. For example, the material of the thin film plate may include a clear polyimide (CPI) film or ultra-thin glass (UTG).

According to various embodiments, the foldable device 200 may further include a protection member(s) 206 or ornamental covers 219 and 229 disposed at at least a portion of the edge of the display 230 on the front surface (e.g., the front surface 210a or the third surface 220a). The protection member 206 or ornamental covers 219 and 229 may prevent at least a portion of the edge of the display 230 from contacting a mechanical structure (e.g., the first housing 210 or the second housing 220) and provide a decorative effect to the outer appearance of the foldable device 200.

FIG. 3A is an example view illustrating a folded state of the foldable device of FIG. 2. For example, FIG. 3A illustrates an 'in-folding' folded state.

Referring to FIG. 3A, the electronic device (e.g., the electronic device 101 of FIG. 1 or the foldable device 200 of FIG. 2) may change from the unfolded state as shown in FIG. 2 to the folded state.

According to an embodiment, in the 'in-folding' folded state of the electronic device, the first area (e.g., the first area 231a of FIG. 2) and second area (e.g., the second area 231b of FIG. 2) of the flexible display (e.g., the display module 160 of FIG. 1) are folded to face each other to be substantially hidden.

According to an embodiment, the first rear cover (e.g., the first rear cover 240 of FIG. 2) and the second rear cover (e.g., the second rear cover 250 of FIG. 2), which are disposed to face in the same direction in the unfolded state, are disposed to face in opposite directions to be exposed to the outside in the folded state.

According to an embodiment, in the folded state, one or more components may be disposed or visually exposed through the first rear cover (or the second rear cover). For example, in the folded state, at least a portion of the sub display 239, the sensor module 255 (e.g., a proximity sensor), the rear camera 253, and/or the flash may be visually exposed through the first rear cover (or second rear cover).

According to an embodiment, in the folded state, the electronic device may provide content through the sub display 239. For example, the content may include a standby screen or an application execution screen. For example, the standby screen may include notification information, such as date information, time information, battery charge amount information, and/or event occurrence.

According to an embodiment, the shape and/or size of the sub display 239, and the type, size, and/or arrangement of the sub display 239, sensor module 255, and/or rear camera 253 may differ from those shown in FIG. 3B.

FIG. 3B is a view illustrating a folded state of a foldable device according to an embodiment.

Referring to FIG. 3B, the rear camera 253 may be oriented vertically unlike that shown in FIG. 2, the size of the sub display 239 may have the vertical length longer than that shown in FIG. 2, and the sensor module 255 may be disposed on the rear camera 253, rather than between the sub display 239 and the rear camera 253 unlike that shown in FIG. 2.

According to an embodiment, the type, shape, size, and/or arrangement of the sub display 239, sensor module 255, and rear camera 253 in FIGS. 3A and 3B is merely an example, and embodiments of the disclosure are not limited thereto. For example, the sub display 239 is rectangular with curved corners in FIGS. 3A and 3B, but it may have a circular or square shape.

According to an embodiment, the type and/or number of at least one component visually exposed through the rear cover (e.g., the first rear cover or the second rear cover) is not limited to those shown in FIGS. 3B and 3B.

According to an embodiment, although FIGS. 3A and 3B illustrate that the electronic device is folded in the 'in-folding' type, it may also be folded in the 'out-folding' type. If the electronic device is folded in the 'out-folding' type, one of the first area (e.g., the first area 231a of FIG. 2) and the second area (e.g., the second area 231b of FIG. 2) of the externally exposed flexible display (e.g., the display module 160 of FIG. 1) may be the sub display 239.

Although FIGS. 2 to 3B illustrate that the first housing and the second housing 220 of the electronic device 200 are disposed on the upper and lower sides of the folding axis A, according to an embodiment, the first housing and the second housing of the electronic device may be disposed on the left and right sides of the folding axis.

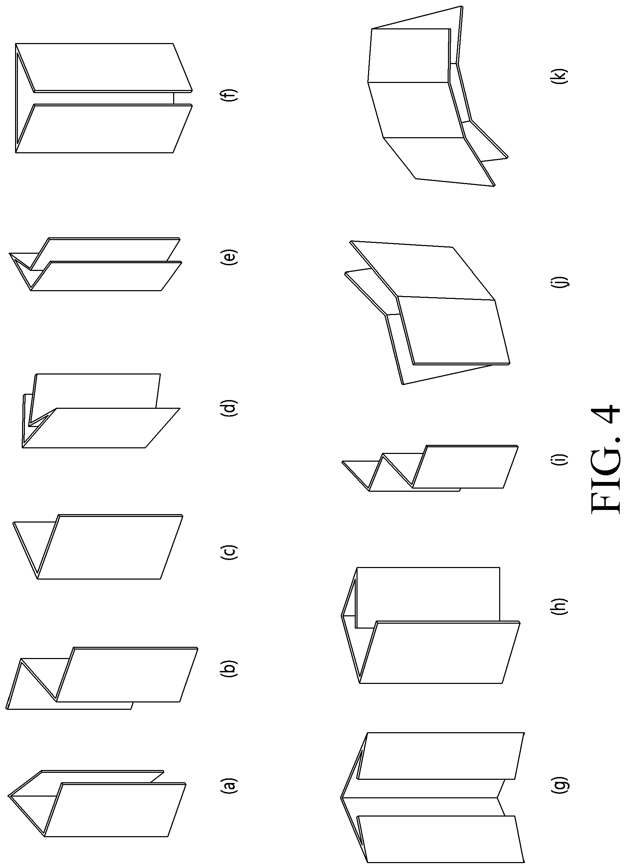

FIG. 4 is a view illustrating various examples of an electronic device including two or more housing structures and a flexible display according to an embodiment.

According to an embodiment, an electronic device may include two or more housing structures rotatably connected with each other and a flexible display.

According to an embodiment, the flexible display may be disposed on two or more housing structures and may be bent according to the rotational state of the housing structures. The rotational state of the housing structures is described below in more detail.

According to an embodiment, the electronic device may be formed in various forms according to two or more housing structures and a flexible display provided in the electronic device and a rotational state of the housing structures. For example, the various forms include a form (half fold) in which two areas are formed in the electronic device (e.g., a flexible display), a form (e.g., tri fold, z fold, or single open gate fold) in which three areas are formed in the electronic device (e.g., a flexible display), a form (e.g., double parallel reverse fold, double parallel fold, double gate fold, roll fold, accordion fold, half fold then half fold) in which four areas are formed in the electronic device (e.g., a flexible display), and a form (e.g., half fold then tri fold) in which more areas are formed in the electronic device (e.g., flexible display). The electronic device may include housing structures rotatably connected with each other and a flexible display. The housing structures may be rotated into a corresponding form.

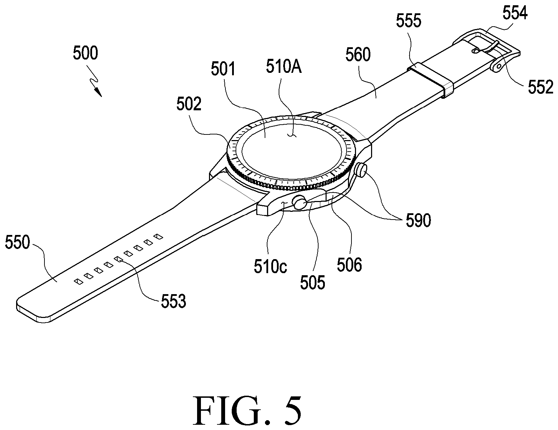

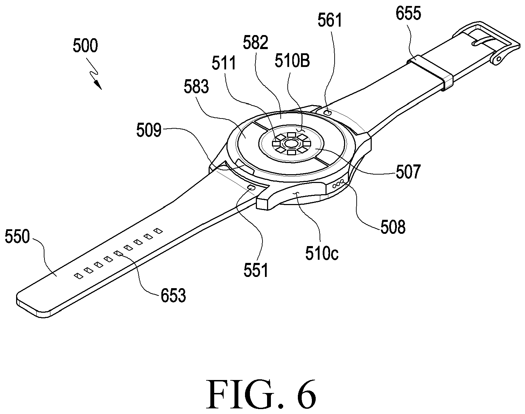

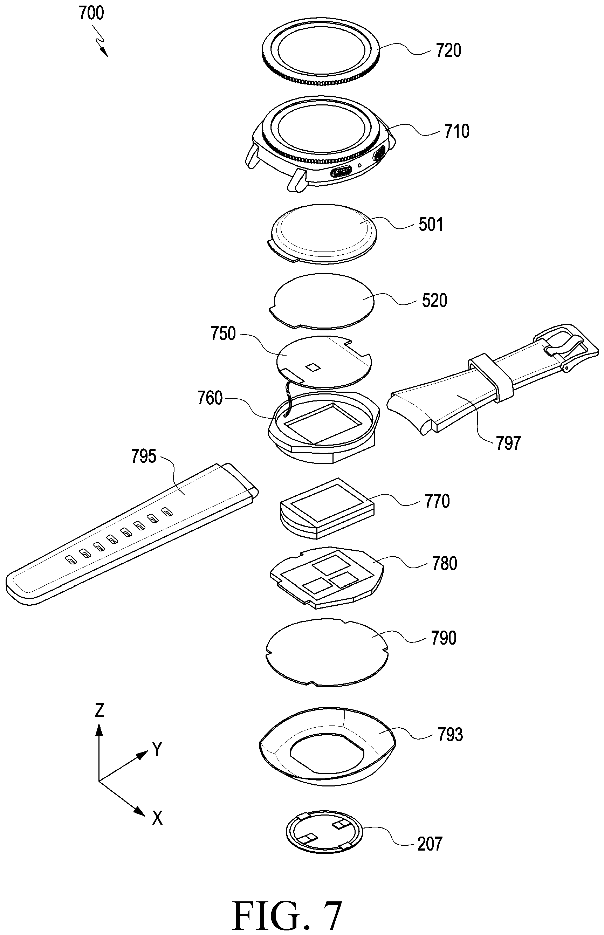

FIG. 5 is a front perspective view illustrating an electronic device according to an embodiment. FIG. 6 is a rear perspective view illustrating the electronic device of FIG. 5. FIG. 7 is an exploded perspective view illustrating the electronic device of FIG. 5.

Referring to FIGS. 5 and 6, the electronic device 500 (e.g., the electronic device of FIG. 1) according to an embodiment may include a housing 510 including a first surface (or front surface) 510A, a second surface (or rear surface) 510B, and a side surface 510C surrounding the space between the first surface 510A and the second surface 510B and binding members 550 and 560 (e.g. straps) connected to at least part of the housing 510 and configured to allow the electronic device 500 to be removably worn on the user's body part (e.g., his wrist or ankle). According to an embodiment, the housing may denote a structure forming part of the first surface 510A, the second surface 510B, and the side surfaces 510C of FIG. 5. According to an embodiment, at least part of the first surface 510A may have a substantially transparent front plate 501 (e.g., a glass plate or polymer plate including various coat layers). The second surface 510B may be formed by a rear cover 507 that is substantially opaque. The rear cover 507 may be formed of, e.g., laminated or colored glass, ceramic, polymer, metal (e.g., aluminum, stainless steel (STS), or magnesium), or a combination of at least two thereof. The side surface 510C may be formed by a side bezel structure (or a "side member") 506 that couples to the front plate 501 and the rear cover 507 and includes a metal and/or polymer. In an embodiment, the rear cover 507 and the side bezel plate 506 may be integrally formed together and include the same material (e.g., a metal, such as aluminum). The binding members 550 and 560 may be formed of various materials in various shapes. A uni-body structure or multiple unit links which is flexible may be formed of fabric, leather, rubber, urethane, metal, ceramic, or a combination of at least two thereof.

According to an embodiment, electrodes 582 and 583 formed of a conductive material may be formed in one area of the rear cover 507 of the electronic device 500.

According to an embodiment, the electronic device 500 may include at least one or more of a display 520 (refer to FIG. 7), audio modules 505 and 508, a sensor module 511, key input devices 502 and 590, and a connector hole 509. In an embodiment, the electronic device 500 may exclude at least one (e.g., the key input devices 502 and 590, connector hole 509, or sensor module 511) of the components or may add other components.

The display 520 may be exposed through a significant portion of the front plate 501. The display 520 may have a shape corresponding to the shape of the front plate 501, e.g., a circle, ellipse, or polygon. The display 520 may be coupled with, or disposed adjacent, a touch detection circuit, a pressure sensor capable of measuring the strength (pressure) of touches, and/or fingerprint sensor.

The audio modules 505 and 508 may include a microphone hole 505 and a speaker hole 508. A microphone for acquiring external sounds may be disposed in the microphone hole 505. In an embodiment, a plurality of microphones may be disposed to detect the direction of the sound. The speaker hole 508 may be used for an external speaker or a receiver for phone talks. In an embodiment, the speaker hole 508 and the microphone hole 505 may be implemented as a single hole, or speaker may be included without the speaker hole 508 (e.g., piezo speaker).

The sensor module 511 may produce an electrical signal or data value corresponding to the internal operation state or external environment state of the electronic device 500. The sensor module 511 may include, e.g., a biometric sensor module 511 (e.g., a heartrate monitor (HRM) sensor) disposed on the second surface 510B of the housing 510. The electronic device 500 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 502 and 590 may include a wheel key 502 disposed on the first surface 510A of the housing 510 to be rotatable in at least one direction and/or key buttons 590 disposed on the side surface 510C of the housing 510. The wheel key may have a shape corresponding to the shape of the front plate 501. In an embodiment, the electronic device 500 may exclude all or some of the above-mentioned key input devices 502 and 590 and the excluded key input devices 502 and 590 may be implemented in other forms, e.g., as soft keys on the display 520.

According to an embodiment, the wheel key 502 may be physically rotated or fixed. For example, if the wheel key 502 is rotated, the electronic device 500 may perform an operation corresponding to the rotation of the wheel key 502. According to an embodiment, when the wheel key 502 is fixed, if the wheel key 502 is touched, and a user input of dragging along the wheel key 502 in a state in which the touch is maintained is received, the electronic device 500 may perform an operation corresponding to the user input. According to an embodiment, the operation corresponding to the rotation of the wheel key 502 may be the same as the operation corresponding to the user input of touching and dragging the wheel key 502.

The connector hole 509 may receive a connector (e.g., a universal serial bus (USB) connector) for transmitting and receiving power and/or data to/from an external electronic device. Another connector hole may be included for receiving a connector for transmitting and receiving audio signals to/from the external electronic device. The electronic device 500 may further include a connector cover to cover at least part of, e.g., the connector hole 509 and preventing undesirable materials from entering the connector hole.

The binding members 550 and 560 may detachably be bound to at least portions of the housing 510 via locking members 551 and 561. The binding members 550 and 560 may include one or more of a fixing member 552, fixing member coupling holes 553, a band guide member 554, and a band fixing ring 555.

The fixing member 552 may be configured to allow the housing 510 and the binding members 550 and 560 to be fastened to the user's body portion (e.g., wrist or ankle). The fixing member coupling holes 553 may fix the housing 510 and the binding members 550 and 560 to the user's body portion, corresponding to the fixing member 552. The band guide member 554 may be configured to restrict movement of the fixing member 552 to a certain range when the fixing member 552 fits into one of the fixing member coupling holes 553, thereby allowing the binding members 550 and 560 to be tightly bound onto the user's body portion. The band fixing ring 555 may limit the range of movement of the binding members 550 and 560, with the fixing member 552 fitted into one of the fixing member coupling holes 553.

Referring to FIG. 7, an electronic device 700 (e.g., the electronic device 500 of FIGS. 2 and 3) may include a side bezel structure 710, a wheel key 720 (e.g., the wheel key 502 of FIG. 5), a front plate 501, a display 520, a first antenna 750, a supporting member 760 (e.g., a bracket), a battery 770, a first printed circuit board 780, a sealing member 790, a rear plate 793, and binding members 795 and 797 (e.g., the binding members 550 and 560 of FIGS. 5 and 6). At least one of the components of the electronic device 700 may be the same or similar to at least one of the components of the electronic device 500 of FIG. 5 or 6 and no duplicate description is made below. The supporting member 760 may be disposed inside the electronic device 700 to be connected with the side bezel structure 710 or integrated with the side bezel structure 710. The supporting member 760 may be formed of, e.g., a metal and/or non-metallic material (e.g., polymer). The display 520 may be joined onto one surface of the supporting member 760, and the first printed circuit board 780 may be joined onto the opposite surface of the supporting member 460. A processor, memory, and/or interface may be mounted on the first printed circuit board 780. The processor may include one or more of, e.g., a central processing unit, an application processor, a graphic processing unit (GPU), a sensor processor, or a communication processor.

The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 700 with an external electronic device and may include a USB connector, an SD card/multimedia card (MMC) connector, or an audio connector.

The battery 770 may be a device for supplying power to at least one component of the electronic device 700. The battery 277 may include, e.g., a primary cell which is not rechargeable, a secondary cell which is rechargeable, or a fuel cell. At least a portion of the battery 770 may be disposed on substantially the same plane as the first printed circuit board 780. The battery 770 may be integrally or detachably disposed inside the electronic device 700.

The first antenna 750 may be disposed between the display 520 and the supporting member 760. The first antenna 750 may include, e.g., a near-field communication (NFC) antenna, a wireless charging antenna, and/or a magnetic secure transmission (MST) antenna. The first antenna 750 may perform short-range communication with an external device, wirelessly transmit/receive power necessary for charging, or transmit magnetic-based signals including payment data or short-range communication signals. According to an embodiment, an antenna structure may be formed by a portion or combination of the side bezel structure 710 and/or the supporting member 760.

The sealing member 790 may be positioned between the side bezel structure 710 and the rear plate 793. The sealing member 790 may be configured to block moisture or foreign bodies that may enter the space surrounded by the side bezel structure 710 and the rear plate 793, from the outside.

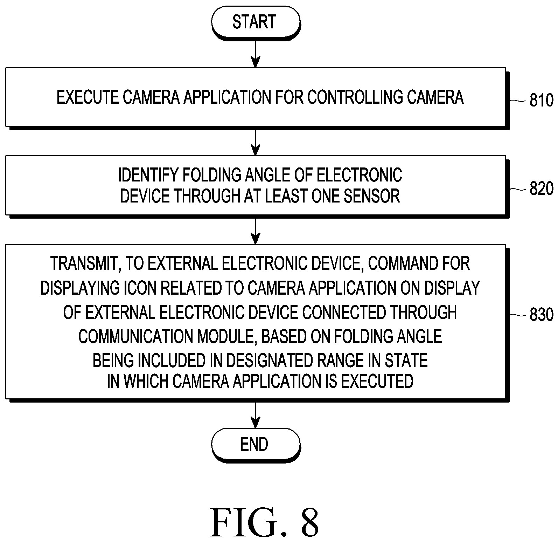

FIG. 8 is a flowchart illustrating an operation of transmitting a command for displaying an icon on an external electronic device based on a folding state and whether an application of an electronic device is executed according to an embodiment. In particular, FIG. 8 and other approaches of the present application provide a user with an efficient means to control (remotely) image capture by a first electronic device (e.g. a smartphone) via second electronic device (e.g. a wearable device such as a smartwatch). For example, using one or more of the conditions described herein, the first electronic device may detect when the user intends to capture an image using the first electronic device and provide means to control capture of the image via the second electronic device. By virtue of such an approach a user may be provided with the means to remotely control a device without being required to complete one or more control initiation steps (beyond those relating to physical placement of the device and/or selection of the application of interest), such as requesting remote control and selecting a device to act as the remote control. Furthermore, the manner in which the icon on the second electronic device indicates the available remote control functionality does not significantly obstruct other uses of the second electronic device.

Whilst FIG. 8 describes the initiation of the display of the icon at the second electronic device being based (i.e. dependent) on the execution of a camera application and a folding angle of the electronic device, the executed application may be any application that a user may wish to remotely control and the trigger for display of the icon at the second electronic device may include any suitable change of state at the first electronic device that indicates that the user may wish to remotely control the application, for example, a particular positioning of the first electronic device, a particular movement (or lack of) of the first electronic device, or a particular user input to the first electronic device. **In** some examples, the state of the first electronic device on which the display of the icon is dependent may be referred to as a mounting state of the first electronic device.

With respect to FIG. 8 and all other methods and flowcharts discussed in this disclosure, steps may be reordered, steps may be combined, steps may be separated into two or more steps, steps may be omitted, and/or additional steps may be introduced.

Referring to FIG. 8, in operation 810, an electronic device (e.g., the electronic device 101 of FIG. 1, the processor 120 of FIG. 1, or the electronic device 200 of FIG. 2) may execute an application for controlling a camera (e.g., the camera module 180 of FIG. 1). For example, the application for controlling the camera may be a camera application.

In operation 820, the electronic device may identify the folding angle of the electronic device through at least one sensor (e.g., the sensor module 176 of FIG. 1). For example, the folding angle may include at least one of a rotation angle of the hinge structure of the electronic device, an angle of the flexible display, and an angle between two housings connected to the hinge structure.

According to an embodiment, the electronic device may be of a bar type or a rollable type rather than a foldable device. According to an embodiment, the electronic device may identify the mounting state (i.e. positional state) of the electronic device through at least one sensor. The mounting state may refer to a state in which the electronic device has no movement (e.g., movement, rotation, and/or folding angle change). For example, the mounting state may be a state in which the sensing value of at least one sensor (e.g., an acceleration sensor or a motion sensor) sensing the movement of the electronic device is 0 or less than a set value. According to an embodiment, the electronic device may identify that it is mounted if the sensing value related to the movement of the electronic device is 0 or less than the set value, and a sensing value of the touch sensor is 0 or less than the set value. According to an embodiment, when it is detected that the sensing value related to the movement of the electronic device is 0 or less than the set value and the distance from the external electronic device is increased, the electronic device may identify that the electronic device is mounted. The mounting state may include a device being positioned at a particular angle with respect to the horizontal or vertical (potentially for a certain period of time), such as may occur when positioning a device to capture a photo without the device being held.

For example, the electronic device may identify the mounting state of the electronic device including the direction in which the electronic device is placed through the gyro sensor. For example, the electronic device may identify the mounting state of the electronic device including whether the electronic device rotates through the acceleration sensor.

In operation 830, the electronic device may transmit, to an external electronic device, a command for displaying an icon (i.e. a user interface item, symbol, button etc.) related to the application for controlling the camera on the display of the external electronic device (e.g., the electronic device 104 of FIG. 1, the electronic device 500 of FIG. 5, or the electronic device 700 of FIG. 7) connected through the communication module (e.g., the communication module 190 of FIG. 1) based on the folding angle being included in a designated range (e.g., an angle range not being 0 degrees and 180 degrees) in a state in which the application for controlling the camera is executed.

According to an embodiment, when the folding angle is within the designated range, the electronic device may be in a partially unfolded (or partially folded) intermediate state (partially open state or partially closed state). According to an embodiment, the designated range may be set to differ for each electronic device and may be a folding angle range to which operations of the disclosure are applied.

According to an embodiment, the intermediate state may be referred to as a flex mode. For example, the flex mode may be a state in which the foldable device is folded at an angle within a predetermined range, and may be a state in which the foldable device does not fall even if the user does not hold the foldable device.

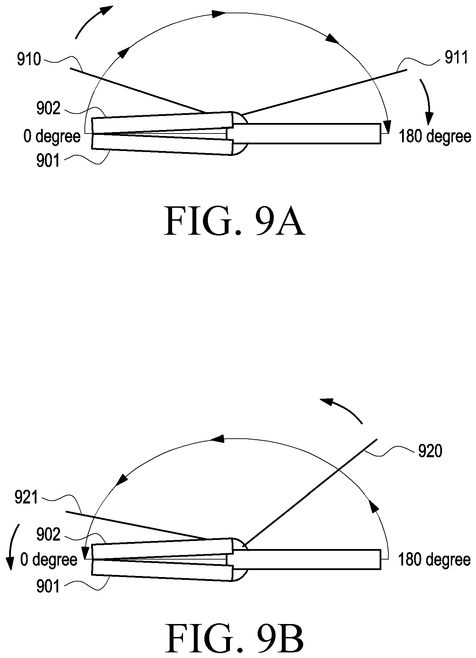

According to an embodiment, the folding angle within the designated range is described in more detail with reference to FIGS. 9A and 9B.

According to an embodiment, when the electronic device is of a bar type or a rollable type, the electronic device may transmit, to the external electronic device, a command for displaying an icon related to the application for controlling the camera on the display of the external electronic device connected through the communication module when the angle between the surface of the display and the ground is within a designated range in a state in which the application for controlling the camera is executed.

According to an embodiment, when the folding angle or the angle between the surface of the display and the ground is maintained for a set time or longer without rotation or movement of the electronic device in a state in which the application for controlling the camera is executed, the electronic device may transmit a command for displaying the icon to the external electronic device.

According to an embodiment, the electronic device may transmit a command for displaying an icon to the external electronic device when the folding angle or the angle between the surface of the display and the ground is maintained and the grip sensor detects that the user does not hold the electronic device for a set time or longer in the state in which the application for controlling the camera is executed.

According to an embodiment, the external electronic device may be a wearable electronic device. For example, the external electronic device may be a smart watch including a display. For example, the external electronic device may communicate with the electronic device through the communication module (e.g., Wi-Fi, Bluetooth, ultra-wide band (UWB)).

According to an embodiment, the icon may be for executing an application (e.g., a camera controller application) of the external electronic device for controlling the camera application of the electronic device connected to the external electronic device. For example, the camera controller application may control shutter operation (e.g. trigger image capture), capturing mode switching (e.g., photo mode or video mode), timer, zoom, front/rear camera switching, and/or video recording of the camera application of the communicatively connected electronic device, and may identify the preview, captured photo, or captured video.

According to an embodiment, when a timer application for the camera control application (e.g. a time delay function of the camera application for image capture) is executed in the mounted state in which the folding angle or the angle between the ground and the surface of the display is maintained for a predetermined time or longer without rotation or movement of the electronic device, the electronic device may transmit a command for displaying an icon related to the timer application to the external electronic device. According to an embodiment, one of the flex mode condition and the mounted state condition in which there is no movement for a predetermined time may be omitted from any of the approaches discussed in this disclosure.

According to an embodiment, the icon may be displayed as an upper layer on the screen of the external electronic device based on the command received from the electronic device. For example, the icon may be displayed as an upper layer overlaid in a partial area of the execution screen of the application or the home screen of the external electronic device. For example, the home screen may include a screen (e.g., a screen including a complication of user interface items/icons) in which a plurality of functions are arranged by a user setting. For example, the icon may be overlaid and displayed in a partial area of the screen.

According to an embodiment, an icon for executing an application may be displayed in a situation where the application corresponding to the icon is not currently executed or not currently executed in the foreground in the external electronic device. For example, the external electronic device may display an icon for executing the camera controller application in a state in which the camera controller application for controlling the camera application of the electronic device is not currently executed. According to an embodiment, the icon may be referred to as an ongoing icon.

For example, the on-going icon may be displayed or deleted when a predefined condition is satisfied. The predefined condition may be included in data of a specific application (e.g., the timer application or the camera application). The predefined condition may be input during manufacturing, and may not be set by the user.

According to an embodiment, the ongoing icon may be displayed as the uppermost layer with respect to the home screen or the application execution screen of the external electronic device that is a wearable electronic device. For example, even in an area where information is displayed on the home screen or the application execution screen, the ongoing icon may be overlaid and displayed on the information of the home screen or application execution screen. According to an embodiment, when the information of the home screen or the execution screen of the application and the ongoing icon are overlaid and displayed, if a touch input is received in the overlaid area, the external electronic device may first apply the touch input to the ongoing icon.

According to an embodiment, when the home key is pressed, or the screen is switched by executing another application in a state in which the ongoing icon is displayed on the external electronic device, the ongoing icon may be overlaid and displayed as an upper layer on the switched screen. Alternatively, the ongoing icon may be removed if an application unrelated to control of the camera of the electronic device is executed.

According to an embodiment, although the folding angle or mounted state of the electronic device communicatively connected to the external electronic device is changed (within a designated range for displaying the ongoing icon) in a state in which the ongoing icon is displayed on the external electronic device, the external electronic device may maintain display of the ongoing icon. For example, this may allow the user to reposition the electronic device in order to change the image or the image composition being captured by the camera without control of the camera via the external device being terminated.

According to an embodiment, the display of the external electronic device may maintain the display of the external electronic device as an on state in a state in which the ongoing icon is displayed on the external electronic device whilst the command is being received from the electronic device or if an appropriate terminate command is not received from the electronic device. For example, the external electronic device may maintain the display of the electronic device as the on state by restricting the power saving mode (e.g., sleep mode). According to an embodiment, the external electronic device may maintain the display of the ongoing icon even on the always on display (AOD) screen of the external electronic device. In other examples, the display of the external electronic device may be maintained in an on state and/or the icon displayed for a preset period of time.

According to an embodiment, when the electronic device communicatively connected to the external electronic device is fully folded (e.g., when the folding angle is 0 degrees) or fully unfolded (e.g., when the folding angle is 180 degrees) in a state in which the ongoing icon is displayed on the external electronic device, the electronic device may transmit a command for deleting the ongoing icon and/or transmit information on the folding state of the electronic device to the external electronic device. The external electronic device may delete the ongoing icon based on receiving the folding state of the electronic device and/or the ongoing icon delete command from the electronic device. For example, the external electronic device may release the display of the ongoing icon based on receiving the folding state of the electronic device and/or the ongoing icon delete command from the electronic device. For example, if the folding state (e.g. angle or mounted state) of the electronic device falls outside of a predetermined range and/or varies outside of a predetermined range, the external electronic device may release the display of the ongoing icon.

According to an embodiment, when the camera application is terminated on the electronic device communicatively connected to the external electronic device in a state in which the ongoing icon is displayed on the external electronic device, the electronic device may transmit the camera application execution state of the electronic device and/or an ongoing icon delete command to the external electronic device. The external electronic device may delete the ongoing icon based on receiving the camera application execution state of the electronic device and/or the ongoing icon delete command from the electronic device.

According to an embodiment, when the communication connection between the external electronic device and the electronic device is disconnected or the ongoing icon is selected to execute the camera controller application in a state in which the ongoing icon is displayed on the external electronic device, the external electronic device may delete (i.e. stop displaying) the ongoing icon.

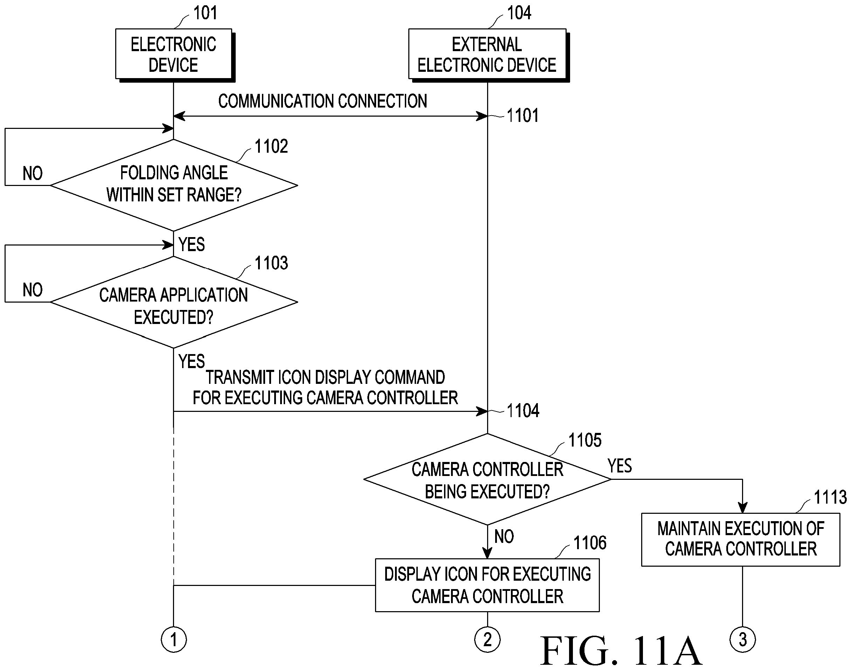

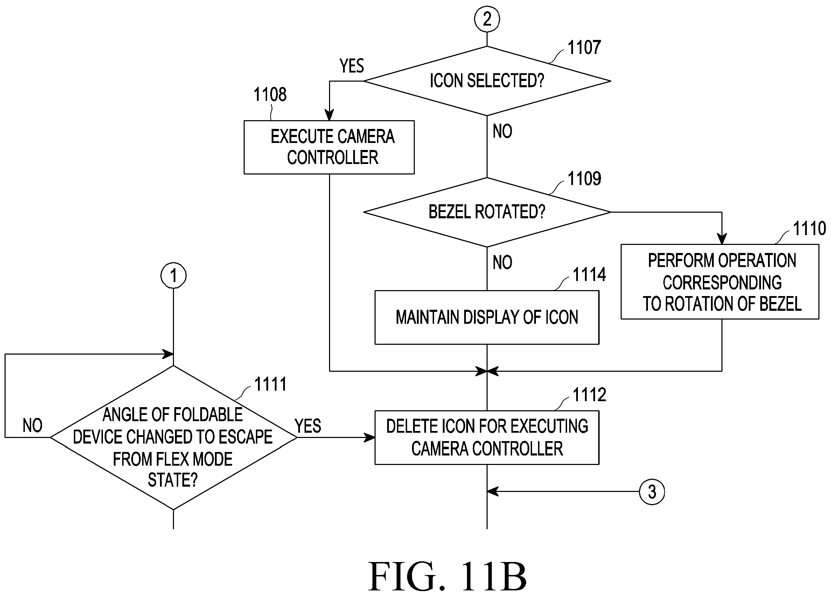

According to an embodiment, display of the ongoing icon on the external electronic device based on the folding state and/or the application execution state of the electronic device is described below with reference to FIGS. 11A and 11B.

According to an embodiment, the electronic device may transmit the command for displaying an icon to the external electronic device based on the folding angle being included in a designated range after the electronic device is fully folded or fully unfolded in a state in which the camera application is executed. For example, even when the folding angle not being in the flex mode is changed into the flex mode while the camera application is executed, the electronic device may transmit a command for displaying the ongoing icon on the display of the external electronic device to the external electronic device. In other words, the transition from a fully (or substantially) folded or unfolded state to a partially folded/unfolded state (i.e. flex mode) whilst the application for controlling the camera (e.g. a camera application) is being executed can be used as a trigger for transmitting a command for displaying the ongoing icon on the display of the external electronic device to the external electronic device. Alternatively, the trigger may be an application for controlling the camera being executed within a certain time after said transition.

According to an embodiment, if the electronic device is of a bar type or rollable type, the electronic device may transmit, to the external electronic device, a command for displaying the ongoing icon on the display of the external electronic device when the angle between the surface of the display and the ground falls outside a set range or when the angle between the surface of the display and the ground is changed to be included in the set range in the moving or rotating state while the camera application is executed. Alternatively, the trigger may be an application for controlling the camera being executed within a certain time after said change.

In another embodiment, the command for displaying the ongoing icon on the display of the external electronic device may be triggered when an application for controlling the camera is executed and the external electronic device (i.e. such as one worn by the user) is detected as being more than a certain distance away from the electronic device.

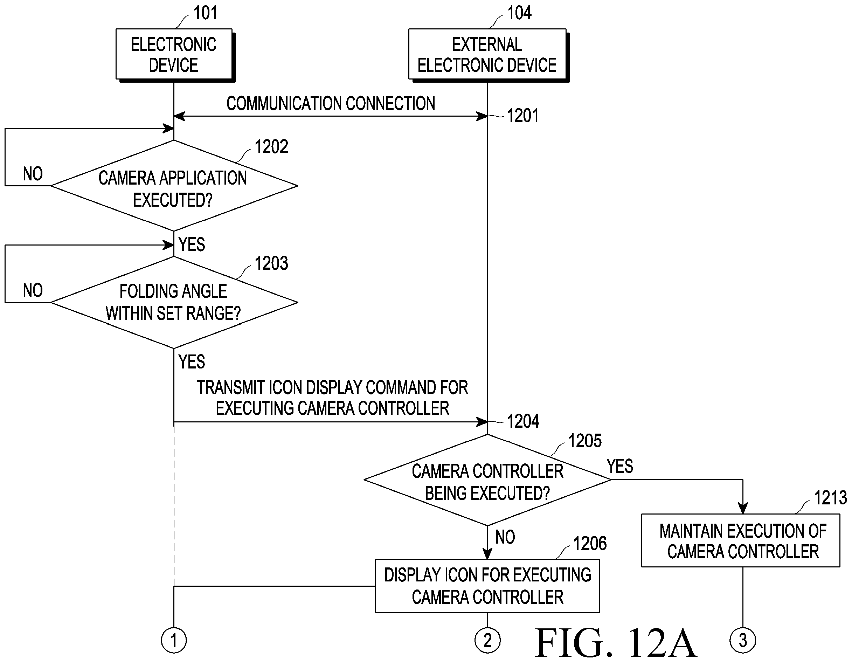

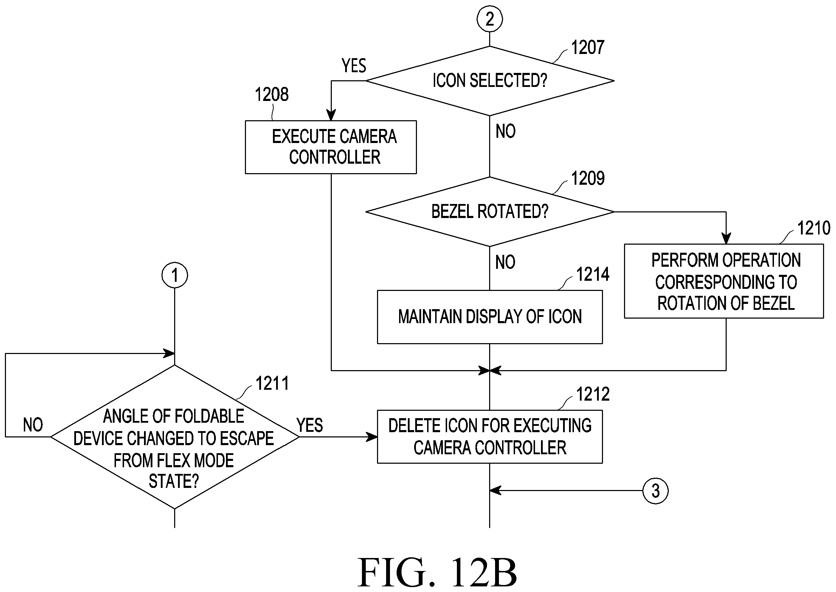

According to an embodiment, an embodiment of displaying the ongoing icon on the external electronic device according to the folding angle after executing an application is described below in detail with reference to FIGS. 12A and 12B.

As such, in a state in which the electronic device is fixed although spaced apart from the user, and the wearable electronic device is in contact with the user's body, the controller may determine a context useful for the user and provide an icon for executing the controller to allow the user to quickly use the controller, thereby enabling remote control of the camera/camera application of the electronic device.

According to an embodiment, the electronic device may receive a request for information related to the function being executed on the camera application from the external electronic device. For example, when the ongoing icon displayed on the external electronic device is selected, the external electronic device may transmit a request for information related to the function being executed on the camera application to the electronic device.

According to an embodiment, the electronic device may transmit the information related to the function being executed on the camera application to the external electronic device based on receiving the request. According to an embodiment, the external electronic device may display a screen related to the application being executed on the electronic device, based on the information received from the electronic device. For example, the external electronic device may display the execution screen of the application for controlling the camera application (e.g. an image preview screen, settings screen etc.) of the electronic device based on the received information.

According to an embodiment, the electronic device may transmit a command for executing the application of the external electronic device related to the camera application to the external electronic device, based on receiving an input for capture through the camera application after transmitting the command for displaying an icon to the external electronic device. According to an embodiment, the electronic device may transmit a command for executing the camera controller application to the external electronic device, based on receiving a gesture input (e.g., opening a hand toward the camera) or execution of a timer for capture through the camera application of the electronic device in a state in which the ongoing icon is displayed on the external electronic device.

According to an embodiment, the external electronic device may display the execution screen of the camera controller application based on receiving the execution command of the application (e.g., the camera controller application) for controlling the camera application of the external electronic device in a state in which the ongoing icon is displayed on the external electronic device.

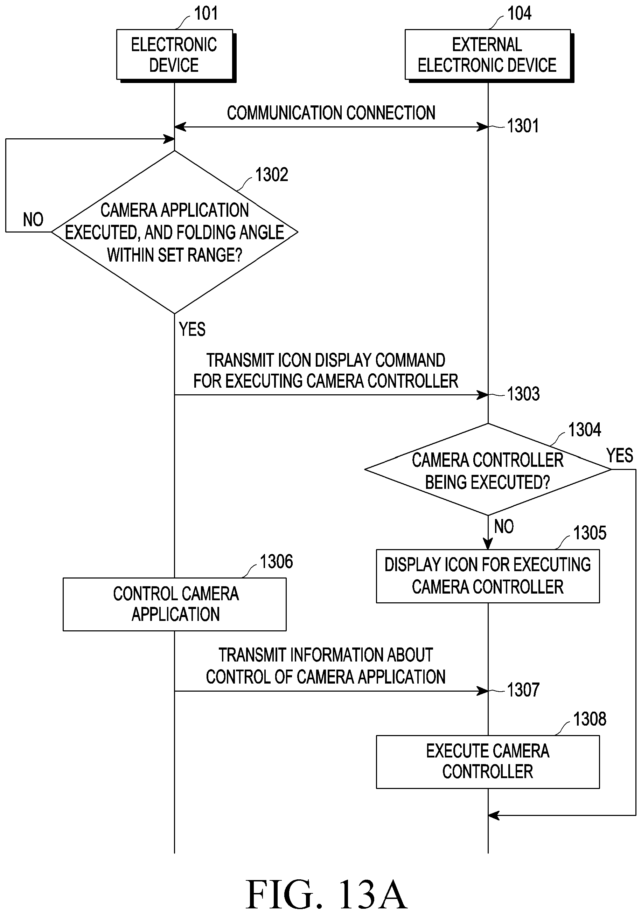

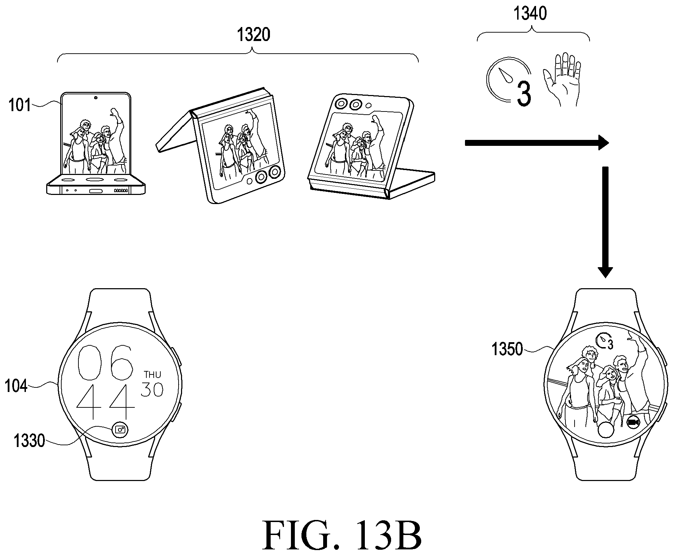

According to an embodiment, an embodiment in which the camera controller application is executed under the control of the electronic device in a state in which the ongoing icon is displayed on the external electronic device is described below in detail with reference to FIGS. 13A and 13B.

According to an embodiment, the electronic device may perform a function corresponding to a control command based on receiving the control command of the camera application from the external electronic device through the communication module. For example, when receiving an input for controlling the shutter operation, capture mode switch, timer, zoom, and/or video recording through the camera controller application of the external electronic device, the external electronic device may transmit a control command corresponding to the input to the electronic device. According to an embodiment, the electronic device may perform the function corresponding to the received control command.

According to an embodiment, the external electronic device may perform the function of the application even when not displaying the execution screen of the application corresponding to the icon, based on the user input on the icon (e.g., the ongoing icon) displayed on the external electronic device. For example, based on receiving an input of touching and then dragging the icon, the external electronic device may execute the function corresponding to the drag input. For example, the external electronic device may display a user interface (UI) capable of executing the function corresponding to the function being executed of the camera application of the electronic device received through the communication module, based on receiving a zoom-in or zoom-out operation for the icon.

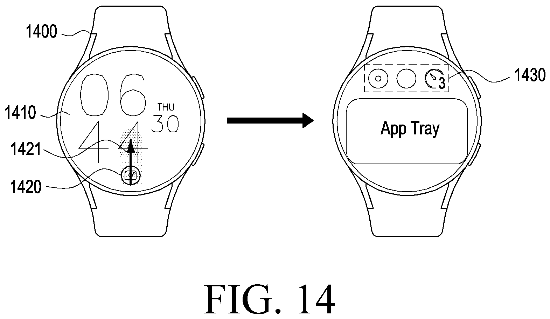

According to an embodiment, an operation for performing a function corresponding to a user input on an icon displayed on an external electronic device is described below in detail with reference to FIGS. 14, 15, 21A, and 21B.

According to an embodiment, the external electronic device may further include a bezel (e.g., the wheel key 502 of FIG. 5 or the wheel key 720 of FIG. 7) disposed to be rotatable along the boundary of the display.

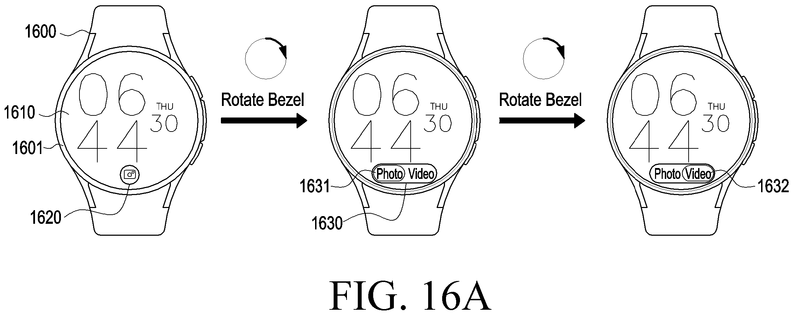

According to an embodiment, based on detecting rotation of the bezel in a state in which the icon is displayed, the external electronic device may replace the icon with at least one UI related to the function corresponding to the direction of rotation of the bezel and display the at least one UI. According to an embodiment, an operation of performing a function corresponding to rotation of the bezel in a state in which the icon is displayed is described in more detail with reference to FIGS. 16A, 16B, 16C, 17, 18, 19, 20, 21C, 21D, and 21E.

As such, in a state in which the electronic device is fixed although spaced apart from the user, and the wearable electronic device is in contact with the user's body, the controller may determine a context useful for the user and provide an icon for executing the controller to allow the user to quickly use the controller, thereby enabling remote control of the camera of the electronic device.

Although embodiments of the camera application of the electronic device and the camera controller application of the external electronic device are disclosed above, the operations of the disclosure may be applied even where applications interoperable with the external electronic device are executed without limitations to the camera application.

FIG. 9A is a view illustrating an operation of an electronic device according to a folding angle when the electronic device which is a foldable device is unfolded according to an embodiment.

Referring to FIG. 9A, an electronic device (e.g., the electronic device 101 of FIG. 1 or the electronic device 200 of FIG. 2) may include a first housing 901 (e.g., the first housing 210 of FIG. 2) and a second housing 902 (e.g., the second housing 220 of FIG. 2). The first housing 901 and the second housing 902 may be connected through a hinge structure and may be folded or unfolded through the hinge structure. According to an embodiment, the angle between the first housing 901 and the second housing 902 may be a folding angle.

According to an embodiment, when the folding angle between the first housing 901 and the second housing 902 is 0 degrees, the electronic device may be in the fully folded state. According to an embodiment, when the second housing 902 is gradually unfolded with respect to the first housing 901 so that it is detected that the folding angle between the first housing 901 and the second housing 902 is larger than or equal to a first value 910, the electronic device may display a screen in the flex mode. For example, the first value 910 may be about 20 degrees.

According to an embodiment, when it is detected that the folding angle between the first housing 901 and the second housing 902 is larger than or equal to a second value 911 as the second housing 902 is gradually unfolded with respect to the first housing 901 in a state in which the screen in the flex mode is displayed, the electronic device may release the display of the screen in the flex mode. For example, the second value 911 may be about 160 degrees.

For example, when it is detected that the folding angle is larger than or equal to the first value 910 and less than the second value 911 in a state in which the camera application is displayed, the electronic device may transmit a command of displaying an icon for executing the camera controller application to the external electronic device.

FIG. 9B is a view illustrating an operation of an electronic device according to a folding angle when the electronic device which is a foldable device is folded according to an embodiment.

Referring to FIG. 9B, when the folding angle between the first housing 901 and the second housing 902 is 180 degrees, the electronic device may be in the fully unfolded state. According to an embodiment, when the second housing 902 is gradually folded with respect to the first housing 901 so that it is detected that the folding angle between the first housing 901 and the second housing 902 is a third value 920 or less, the electronic device may display a screen in the flex mode. For example, the third value 920 may be about 150 degrees.

According to an embodiment, when it is detected that the folding angle between the first housing 901 and the second housing 902 is a fourth value 921 or less as the second housing 902 is gradually folded with respect to the first housing 901 in a state in which the screen in the flex mode is displayed, the electronic device may release the display of the screen in the flex mode. For example, the fourth value 921 may be about 10 degrees.

For example, when it is detected that the folding angle is the third value 920 or less and more than the fourth value 921 in a state in which the camera application is displayed, the electronic device may transmit a command of displaying an icon for executing the camera controller application to the external electronic device.

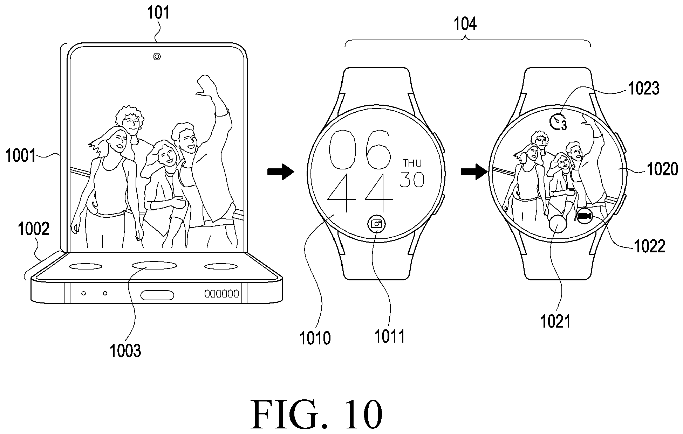

FIG. 10 is a view illustrating an operation of an external electronic device based on a folding state and whether an application of an electronic device is executed according to an embodiment.

Referring to FIG. 10, an electronic device 101 (e.g., the electronic device 101 of FIG. 1, the processor 120 of FIG. 1, or the electronic device 200 of FIG. 2) may transmit a command for displaying an icon to an external electronic device 104 (e.g., the electronic device 104 of FIG. 1, the electronic device 500 of FIG. 5, or the electronic device 700 of FIG. 7) when a camera application is executed to display execution screens 1001 and 1002 of the camera application and when it is identified that the folding angle is in a flex mode which is within a set range. According to an embodiment, the electronic device 101 may display a preview screen 1001 of the camera application in an upper area divided based on the flex mode, and may display a camera application control screen 1002 in a lower area. For example, the camera application control screen 1002 may include a button 1003 for capturing the preview screen 1001.

For example, the electronic device 101 may transmit a command for displaying an icon to the external electronic device to display an icon related to the camera controller application for controlling the camera application of the electronic device on the display of the external electronic device. According to an embodiment, FIG. 10 illustrates that the electronic device 101 transmits a command for displaying an icon to the external electronic device 104, but is not limited thereto. The electronic device 101 may transmit a command for outputting a notification indicating that the application of the electronic device 101 is controllable, based on the type of the external electronic device 104. For example, the notification indicating controllability may include a haptic output, an LED lamp output, and/or an audio output. According to an embodiment, even when the external electronic device 104 is a smart ring or earphone that does not include a display, the electronic device 101 may transmit, to the external electronic device 104, a notification (e.g., a haptic output, a LED lamp output, and/or an audio output) indicating that the electronic device 101 may be controlled through the external electronic device 104.

According to an embodiment, upon receiving the command from the electronic device 101, the external electronic device 104 may display an icon 1011 (e.g., an ongoing icon) as an upper layer of the pre-displayed screen 1010. For example, the pre-displayed screen 1010 may be a home screen or an execution screen of a pre-executed application. According to an embodiment, the camera controller application may not operate while the icon 1011 is displayed.

According to an embodiment, the external electronic device 104 may display the icon 1011 in an area other than an area displaying a notification indicating message reception. According to an embodiment, the external electronic device 104 may display the icon 1011 in an area other than an area (e.g., a complication area) in which a plurality of functions/icons are disposed by the user setting. For example, the external electronic device 104 may display the icon 1011 at the lower center of the screen. According to an embodiment, when the notification or complication overlaps the icon 1011, the icon 1011 may be displayed as an upper layer.

According to an embodiment, when a user input for selecting the icon 1011 is received, the external electronic device 104 may display a screen 1020 of the camera controller application. According to an embodiment, when the user input for selecting the icon 1011 is received, the external electronic device 104 may execute the camera controller application. The external electronic device 104 may request information about the current execution state of the camera application from the electronic device 101. The external electronic device 104 may display an execution screen 1020 of the camera controller application based on the information about the current execution state of the camera application received from the electronic device 101. For example, the information about the current execution state of the camera application may include a photo/video recording mode, a timer mode, a zoom state, and/or whether the front/rear camera of the camera application is activated.

For example, the execution screen 1020 of the camera application may include a UI 1021 for photographing, a UI 1022 for switching to a video recording mode, and/or a timer UI 1023, based on the information about the current execution state (e.g., the photo mode and the timer mode) of the camera application in the electronic device 101. In some examples, the execution screen 1020 may be adapted version of the button 1003 or may be a screen representing a composite of the preview screen 1001 and the button 1003.

FIG. 11A is a flowchart illustrating an operation of an external electronic device based on a folding state and whether an application of an electronic device is executed according to an embodiment.

FIG. 11B is a view illustrating an operation of an external electronic device based on a folding state and whether an application of an electronic device is executed according to an embodiment. For example, FIGS. 11A and 11B illustrate an embodiment of detecting a state of a camera application in a state in which mounting of an electronic device is detected.

With respect to FIGS. 11A and 11B, steps may be reordered, steps may be combined, steps may be separated into two or more steps, steps may be omitted, and/or additional steps may be introduced. For example, steps related to the bezel rotation may be omitted or repeating control loops may be omitted.

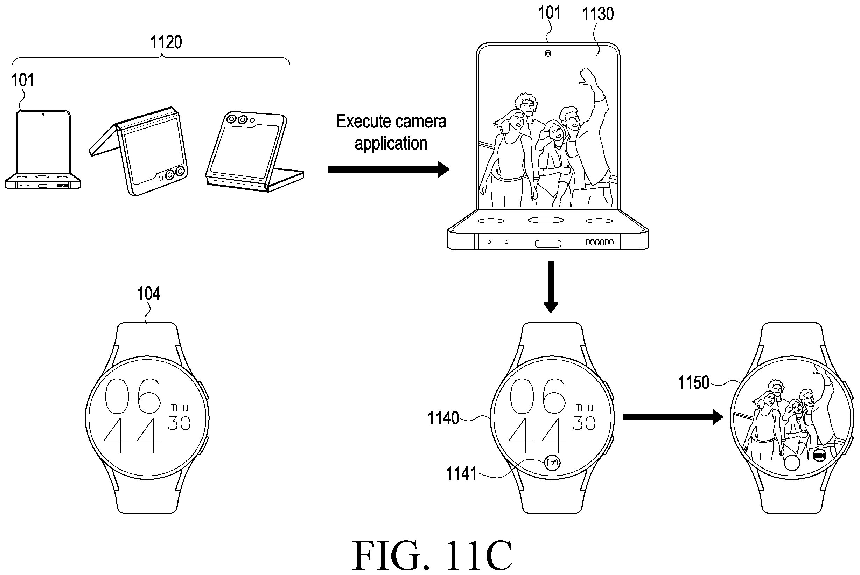

FIG. 11C provides illustrations of the arrangement of the electronic device and the screens of the electronic device and external electronic device described with reference to FIGS. 11A and 11B.

Referring to FIG. 11A, in operation 1101, an electronic device 101 (e.g., the electronic device 101 of FIG. 1, the processor 120 of FIG. 1, or the electronic device 200 of FIG. 2) and an external electronic device 104 (e.g., the electronic device 104 of FIG. 1, the electronic device 500 of FIG. 5, or the electronic device 700 of FIG. 7) may be in a communication connected state. For example, the electronic device 101 and the external electronic device 104 may communicate via Wi-Fi, Bluetooth, or UWB.

In operation 1102, the electronic device 101 may identify whether the folding angle is within a set range. For example, as illustrated in FIG. 11C, the set range of the folding angle may correspond to the flex mode 1120 in which the electronic device may be placed without falling. For example, the set range of the folding angle may be about 20 degrees to about 160 degrees.

When the folding angle is out of the set range (No in operation 1102), the electronic device 101 may perform operation 1102 again.

If the folding angle is within the set range (Yes in operation 1102), in operation 1103, the electronic device 101 may identify whether the camera application is executed.

When the camera application is not executed (No in operation 1103), the electronic device 101 may perform operation 1103 again. According to an embodiment, when the camera application is not executed (No in operation 1103), the electronic device may return to operation 1102 and detect the folding angle again.

When the camera application is executed (Yes in operation 1103), the electronic device 101 may transmit an icon display command for executing the camera controller (or camera controller application) to the external electronic device 104 in operation 1104. For example, as illustrated in FIG. 11C, the electronic device 101 may display the execution screen 1130 of the camera application and may transmit an icon display command for executing the camera controller to the external electronic device 104.

In operation 1105, the external electronic device 104 may identify whether the camera controller is being executed. For example, the external electronic device 104 may identify whether the camera controller is already being executed or whether the execution screen of the camera controller is already being displayed, based on a user input through the external electronic device 104.

When the camera controller is being executed (Yes in 1105), in operation 1113, the external electronic device 104 may maintain execution of the camera controller without performing an icon display operation.

When the camera controller is not executed (No in operation 1105), in operation 1106, the external electronic device 104 may display an icon for executing the camera controller. For example, as illustrated in FIG. 11C, the external electronic device 104 may display an icon 1141 as an upper layer on the pre-displayed screen 1140.

According to an embodiment, the external electronic device 104 may maintain the state in which the camera controller is not executed, and may display an icon for executing the camera controller.

In operation 1107, the external electronic device 104 may identify whether an icon is selected. For example, the external electronic device 104 may identify whether a user input for selecting an icon is received.

When the icon is selected (Yes in operation 1107), in operation 1108, the external electronic device 104 may execute the camera controller. For example, when the icon is selected, the external electronic device 104 may request, from the electronic device 101, information about the currently executed function of the camera application. For example, as illustrated in FIG. 11C, the external electronic device 104 may display the execution screen 1150 of the camera controller based on the information received from the electronic device 101.

When the icon is not selected (No in operation 1107), in operation 1109, the external electronic device 104 may identify whether the bezel rotates while maintaining the display of the icon.

When the rotation of the bezel (e.g., the wheel key 502 of FIG. 5 or the wheel key 720 of FIG. 7) is detected (Yes in operation 1109), in operation 1110, the external electronic device 104 may perform an operation corresponding to the rotation of the bezel. According to an embodiment, the operation corresponding to bezel rotation while the icon is displayed is described in more detail with reference to FIGS. 14 to 21E.

When the rotation of the bezel is not detected (No in operation 1109), in operation 1114, the external electronic device 104 may maintain the display of the icon.

In the state in which the icon is displayed on the external electronic device 104, in operation 1111, the electronic device 101 may identify whether the folding angle is changed to escape from the flex mode state. When the folding angle of the electronic device 101 maintains the flex mode state (No in operation 1111), the electronic device 101 may perform operation 1111 again. When the folding angle of the electronic device 101 is out of the flex mode state (Yes in operation 1111), the electronic device 101 may transmit a command for deleting an icon to the external electronic device 104.

In operation 1112, the external electronic device 104 may delete an icon for executing the camera controller.

FIG. 12A is a flowchart illustrating an operation of an external electronic device based on a folding state and whether an application of an electronic device is executed according to an embodiment.

FIG. 12B is a view illustrating an operation of an external electronic device based on a folding state and whether an application of an electronic device is executed according to an embodiment. For example, FIGS. 12A and 12B illustrate an embodiment in which the electronic device is changed from an unmountable state (e.g., the fully unfolded state or the fully folded state) to the flex mode state while the camera application of the electronic device is executed.

With respect to FIGS. 12A and 12B, steps may be reordered, steps may be combined, steps may be separated into two or more steps, steps may be omitted, and/or additional steps may be introduced. For example, repeating control loops may be omitted.

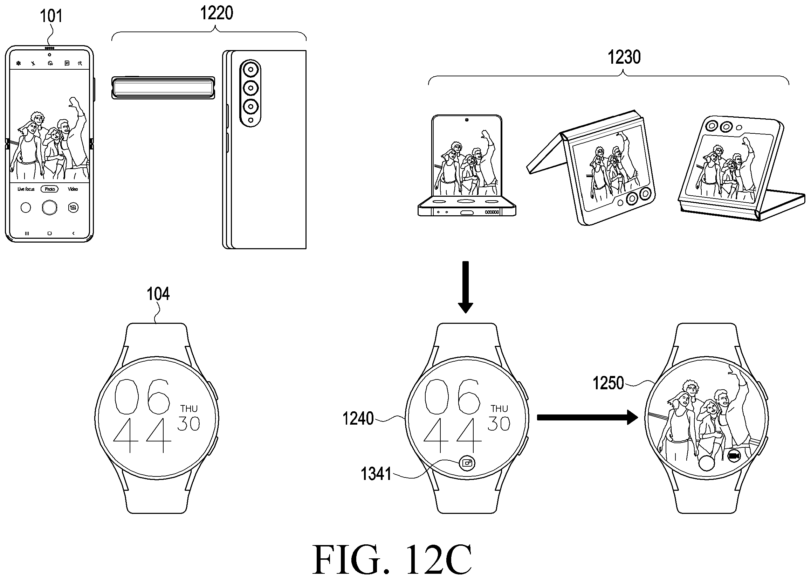

FIG. 12C provides illustrations of the arrangement of the electronic device and the screens of the electronic device and external electronic device described with reference to FIGS. 12A and 12B.

Referring to FIG. 12A, in operation 1201, an electronic device 101 (e.g., the electronic device 101 of FIG. 1, the processor 120 of FIG. 1, or the electronic device 200 of FIG. 2) and an external electronic device 104 (e.g., the electronic device 104 of FIG. 1, the electronic device 500 of FIG. 5, or the electronic device 700 of FIG. 7) may be in a communication connected state. For example, the electronic device 101 and the external electronic device 104 may communicate via Wi-Fi, Bluetooth, or UWB.

In operation 1202, the electronic device 101 may identify whether the camera application is executed.

When the camera application is not executed (No in operation 1202), the electronic device 101 may perform operation 1202 again.

When the camera application is executed (Yes in operation 1202), in operation 1203, the electronic device 101 may identify whether the folding angle is within a set range.

When the folding angle is out of the set range (No in operation 1203), the electronic device 101 may perform operation 1203 again. For example, as illustrated in FIG. 12C, when it is detected that the electronic device 101 is in the fully folded state or the fully unfolded state 1220 in which the electronic device 101 is not mountable in the state in which the camera application is executed, the electronic device 101 may re-perform the operation of detecting the folding angle.

When the folding angle is within the set range (Yes in operation 1203), the electronic device 101 may transmit an icon display command for executing the camera controller (or camera controller application) to the external electronic device 104 in operation 1204. For example, as illustrated in FIG. 12C, when the set range of the folding angle meets the flex mode 1230 in which the electronic device may be placed without falling, the electronic device 101 may transmit an icon display command for executing a camera controller (or a camera controller application) to the external electronic device 104.

In operation 1205, the external electronic device 104 may identify whether the camera controller is being executed. For example, the external electronic device 104 may identify whether the camera controller is already being executed or whether the execution screen of the camera controller is already being displayed, based on a user input through the external electronic device 104.

When the camera controller is being executed (Yes in 1205), in operation 1213, the external electronic device 104 may maintain execution of the camera controller without performing an icon display operation.

When the camera controller is not executed (No in operation 1205), in operation 1206, the external electronic device 104 may display an icon for executing the camera controller. For example, as illustrated in FIG. 12C, the external electronic device 104 may display an icon 1241 as an upper layer on the pre-displayed screen 1240.

According to an embodiment, the external electronic device 104 may maintain the state in which the camera controller is not executed, and may display an icon for executing the camera controller.

In operation 1207, the external electronic device 104 may identify whether an icon is selected. For example, the external electronic device 104 may identify whether a user input for selecting an icon is received.

When the icon is selected (Yes in operation 1207), in operation 1208, the external electronic device 104 may execute the camera controller. For example, when the icon is selected, the external electronic device 104 may request, from the electronic device 101, information about the currently executed function of the camera application. For example, as illustrated in FIG. 12C, the external electronic device 104 may display the execution screen 1250 of the camera controller based on the information received from the electronic device 101.

When the icon is not selected (No in operation 1207), in operation 1209, the external electronic device 104 may identify whether the bezel rotates while maintaining the display of the icon.

When the rotation of the bezel (e.g., the wheel key 502 of FIG. 5 or the wheel key 720 of FIG. 7) is detected (Yes in operation 1209), in operation 1210, the external electronic device 104 may perform an operation corresponding to the rotation of the bezel. According to an embodiment, the operation corresponding to bezel rotation while the icon is displayed is described in more detail with reference to FIGS. 14 to 21E.

When the rotation of the bezel is not detected (No in operation 1209), in operation 1214, the external electronic device 104 may maintain the display of the icon.

In the state in which the icon is displayed on the external electronic device 104, in operation 1211, the electronic device 101 may identify whether the folding angle is changed to escape from the flex mode state. According to an embodiment, when the folding angle of the electronic device 101 maintains the flex mode state (No in operation 1211), the electronic device 101 may perform operation 1211 again. According to an embodiment, when the folding angle of the electronic device 101 is out of the flex mode state (Yes in operation 1211), the electronic device 101 may transmit a command for deleting an icon to the external electronic device 104.

In operation 1212, the external electronic device 104 may delete an icon for executing the camera controller.

FIG. 13A is a flowchart illustrating an operation of an external electronic device based on a control operation of an application in an electronic device in a state in which an icon for executing an application is displayed on the external electronic device according to an embodiment.

FIG. 13B is a view illustrating an operation of an external electronic device based on a control operation of an application in an electronic device in a state in which an icon for executing an application is displayed on the external electronic device according to an embodiment. For example, FIGS. 13A and 13B illustrate an embodiment in which a camera controller application is executed under the control of an electronic device in a state in which an icon is displayed on an external electronic device.

With respect to FIG. 13A, steps may be reordered, steps may be combined, steps may be separated into two or more steps, steps may be omitted, and/or additional steps may be introduced. For example, repeating control loops may be omitted.

Referring to FIG. 13A, in operation 1301, an electronic device 101 (e.g., the electronic device 101 of FIG. 1, the processor 120 of FIG. 1, or the electronic device 200 of FIG. 2) and an external electronic device 104 (e.g., the electronic device 104 of FIG. 1, the electronic device 500 of FIG. 5, or the electronic device 700 of FIG. 7) may be in a communication connected state. For example, the electronic device 101 and the external electronic device 104 may communicate via Wi-Fi, Bluetooth, or UWB.

In operation 1302, the electronic device 101 may identify whether the camera application is executed and the folding angle is within a set range. According to an embodiment, when the camera application is not executed or the folding angle is out of the set range (No in operation 1302), the electronic device 101 may perform operation 1302 again.

When the camera application is executed, and the folding angle is within the set range (Yes in operation 1302), in operation 1303, a command for displaying the camera controller icon may be transmitted to the external electronic device 104. For example, as illustrated in FIG. 13B, the camera application of the electronic device 101 is in a state of being executed, and the set range of the folding angle may meet the flex mode 1320 in which the electronic device may be placed without falling. For example, the set range of the folding angle may be about 20 degrees to about 160 degrees.

When the camera application is executed and the folding angle is within the set range, the electronic device 101 may transmit a command for displaying the camera controller icon to the external electronic device 104.

In operation 1304, the external electronic device 104 may identify whether the camera controller is being executed. For example, the external electronic device 104 may identify whether the camera controller is already being executed or whether the execution screen of the camera controller is already being displayed, based on a user input through the external electronic device 104.

When the camera controller is being executed (Yes in 1304), the external electronic device 104 may maintain execution of the camera controller without performing an icon display operation.

When the camera controller is not executed (No in operation 1304), in operation 1305, the external electronic device 104 may display an icon for executing the camera controller. For example, as illustrated in FIG. 13B, the external electronic device 104 may display an icon 1330 as an upper layer on the pre-displayed screen.

According to an embodiment, the external electronic device 104 may maintain the state in which the camera controller is not executed, and may display an icon for executing the camera controller.

In operation 1306, the electronic device 101 may control the camera application. For example, as illustrated in FIG. 13B, the electronic device 101 may control the camera application based on receiving a gesture input 1340 (e.g., closing and opening a hand after showing the palm to the camera) for a timer operation and/or a shutter operation of the camera application. For example, the electronic device 101 may control the camera application based on receiving a user input for switching capturing modes (photo or video) or zooming in/out.

In operation 1307, the electronic device 101 may transmit information about the control of the camera application to the external electronic device 104.

In operation 1308, the external electronic device 104 may execute the camera controller (or the camera controller application) based on the information about the control of the camera application received from the electronic device 101. For example, as illustrated in FIG. 13B, even if a user selection for the icon is not received, when the external electronic device 104 receives the information about the control of the camera application from the electronic device 101, the external electronic device 104 may display the execution screen 1350 of the camera controller.

According to an embodiment, the external electronic device 104 may display the execution screen of the camera controller and may provide feedback (e.g., sound and/or vibration) indicating that the camera controller is executed.

As described above, when the user spaced apart from the electronic device remotely uses the camera of the electronic device, the camera controller may be automatically executed through the wearable electronic device. Accordingly, it is possible to provide an environment in which the camera controller may be used even when the user does not find the camera controller in the wearable electronic device.

According to an embodiment, in the state in which the execution screen of the camera controller is displayed on the external electronic device 104, the electronic device 101 may identify whether the folding angle is changed to escape from the flex mode state. According to an embodiment, when the folding angle of the electronic device 101 maintains the flex mode state, the electronic device 101 may maintain the camera controller execution operation. According to an embodiment, when the folding angle of the electronic device 101 is out of the flex mode state, the electronic device 101 may transmit a command for deleting an icon to the external electronic device 104.

According to an embodiment, the external electronic device 104 may delete an icon for executing the camera controller.

FIG. 14 is a view illustrating an operation of performing a function based on a user input received through an icon associated with control of the camera, by a wearable electronic device according to an embodiment.

Referring to FIG. 14, a wearable electronic device 1400 (e.g., the electronic device 104 of FIG. 1, the electronic device 500 of FIG. 5, or the electronic device 700 of FIG. 7) may display an icon 1420 on a pre-displayed screen 1410 as an upper layer of the pre-displayed screen 1410. For example, the icon 1420 may be displayed according to a command for displaying an icon (e.g., an ongoing icon) for executing the camera controller transmitted from the electronic device to the wearable electronic device 1400, based on the camera application of the electronic device (e.g., the electronic device 101 of FIG. 1) being executed and the mounted state (e.g., the folding state) being a fixed state (e.g., the flex mode). For example, the icon 1420 may be displayed on the lower end of the display of the external electronic device 1400.

According to an embodiment, based on a drag input 1421 of touching and moving the icon 1420 while remaining touched, the wearable electronic device 1400 may perform a function corresponding to the drag input 1421. For example, the wearable electronic device 1400 may display the plurality of UIs 1430 related to control of the camera application, based on an input 1421 of dragging upward the icon 1420 displayed on the lower end of the wearable electronic device 1400. For example, the plurality of UIs 1430 may include a video capture button, a photograph button, and/or a timer button. For example, the plurality of UIs 1430 may be displayed on an upper end of an application tray including a plurality of applications installed in the wearable electronic device 1400. Although a drag input is considered here, any appropriate form of user input to the icon may be considered, such as flick or a long touch for example.

As described above, the wearable electronic device may provide a UI related to the function of the camera application even if the execution screen of the camera application is not displayed through a user input to the ongoing icon.

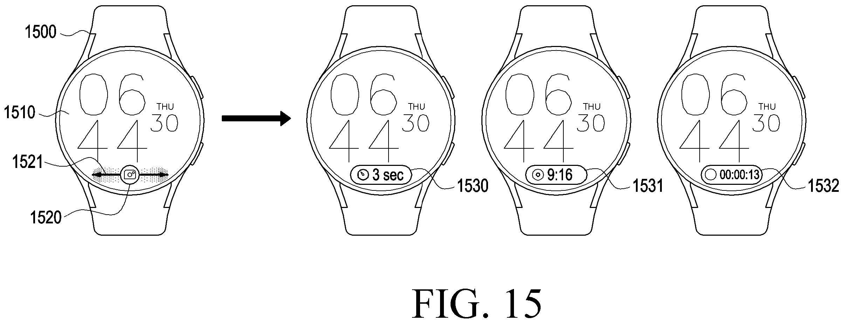

FIG. 15 is a view illustrating an operation of performing a function based on a user input received through an icon associated with control of the camera, by a wearable electronic device according to an embodiment.

Referring to FIG. 15, a wearable electronic device 1500 (e.g., the electronic device 104 of FIG. 1, the electronic device 500 of FIG. 5, or the electronic device 700 of FIG. 7) may display an icon 1520 on a pre-displayed screen 1510 as an upper layer of the pre-displayed screen 1510. For example, the icon 1520 may be displayed according to a command for displaying an icon for executing the camera controller transmitted from the electronic device to the wearable electronic device 1500, based on the camera application of the electronic device (e.g., the electronic device 101 of FIG. 1) being executed and the mounted state (e.g., the folding state) being a fixed state (e.g., the flex mode). For example, the icon 1520 may be displayed on the lower end of the display of the external electronic device 1500.

According to an embodiment, the wearable electronic device 1500 may perform a function corresponding to a pinch-out input 1521, based on the pinch-out input 1521 to the icon 1520. For example, based on the pinch-out input 1521 to the icon 1520 displayed on the lower end of the wearable electronic device 1500, the wearable electronic device 1500 may display the UIs 1530, 1531, and 1532 related to the currently executed function of the camera application in place of the icon 1520. For example, when the camera application of the electronic device is operating in the photo mode, the wearable electronic device 1500 may display a UI 1530 for controlling the photographing timer based on the pinch-out input 1521 to the icon 1520. According to an embodiment, when the camera application of the electronic device is before recording in the video mode, the wearable electronic device 1500 may display a UI 1531 capable of controlling an image ratio based on the pinch-out input 1521 to the icon 1520. According to an embodiment, when the camera application of the electronic device is recording in the video mode, the wearable electronic device 1500 may display a UI 1532 indicating the recording time based on the pinch-out input 1521 to the icon 1520.

As described above, the wearable electronic device may provide a UI related to the function of the camera application even if the execution screen of the camera application is not displayed through a user input to the ongoing icon.

According to an embodiment, the wearable electronic device may receive a user input through rotation of a bezel (e.g., a wheel key) included in the wearable electronic device, rather than a touch input to the ongoing icon. Hereinafter, an operation of performing a corresponding function through rotation of a wheel key in a state in which an ongoing icon is displayed on a wearable electronic device is described.

FIG. 16A is a view illustrating an operation of performing a function based on bezel rotation in a state in which an icon associated with control of the camera is displayed, by a wearable electronic device according to an embodiment.

Referring to FIG. 16A, a wearable electronic device 1600 (e.g., the electronic device 104 of FIG. 1, the electronic device 500 of FIG. 5, or the electronic device 700 of FIG. 7) may display an icon 1620 on a pre-displayed screen 1610 as an upper layer of the pre-displayed screen 1610. According to an embodiment, the wearable electronic device 1600 may include a bezel 1601 (e.g., the wheel key 502 of FIG. 5 or the wheel key 720 of FIG. 7) disposed to be rotatable along the boundary of the display.

For example, the icon 1620 may be displayed according to a command for displaying an icon for executing the camera controller transmitted from the electronic device to the wearable electronic device 1600, based on the camera application of the electronic device (e.g., the electronic device 101 of FIG. 1) being executed and the mounted state (e.g., the folding state) being a fixed state (e.g., the flex mode). For example, the icon 1620 may be displayed on the lower end of the display of the external electronic device 1600.

According to an embodiment, when the bezel 1601 is rotated (e.g., clockwise or counterclockwise) in a state in which the icon 1620 is displayed, the wearable electronic device 1600 may display a UI 1630 for changing the camera capturing mode, in place of the icon 1620. For example, the UI 1630 for changing the camera capturing mode may include a UI 1631 for selecting a photo mode and a UI 1632 for selecting a video mode.

According to an embodiment, the wearable electronic device 1600 may select a UI 1631 for selecting the photo mode and a UI 1632 for selecting the video mode, based on an input of rotating the bezel 1601.

According to an embodiment, the wearable electronic device 1600 may transmit information related to the selected capturing mode to the electronic device (e.g., the electronic device 101 of FIG. 1). According to an embodiment, the electronic device may set the capturing mode based on the capturing mode information received from the wearable electronic device 1600.

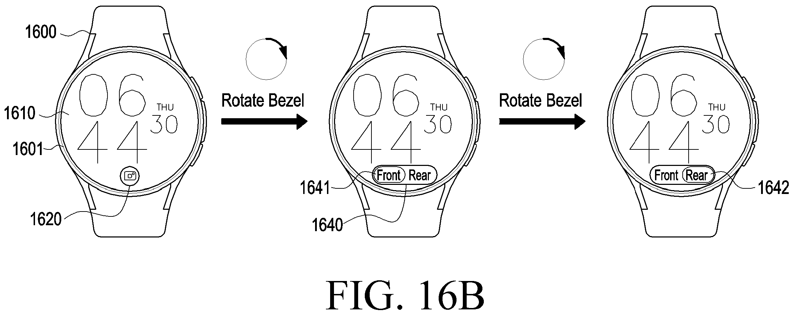

FIG. 16B is a view illustrating an operation of performing a function based on bezel rotation in a state in which an icon associated with control of the camera is displayed, by a wearable electronic device according to an embodiment.

Referring to FIG. 16B, a wearable electronic device 1600 (e.g., the electronic device 104 of FIG. 1, the electronic device 500 of FIG. 5, or the electronic device 700 of FIG. 7) may display an icon 1620 on a pre-displayed screen 1610 as an upper layer of the pre-displayed screen 1610. According to an embodiment, the wearable electronic device 1600 may include a bezel 1601 (e.g., the wheel key 502 of FIG. 5 or the wheel key 720 of FIG. 7) disposed to be rotatable along the boundary of the display.

For example, the icon 1620 may be displayed according to a command for displaying an icon for executing the camera controller transmitted from the electronic device to the wearable electronic device 1600, based on the camera application of the electronic device (e.g., the electronic device 101 of FIG. 1) being executed and the mounted state (e.g., the folding state) being a fixed state (e.g., the flex mode). For example, the icon 1620 may be displayed on the lower end of the display of the external electronic device 1600.

According to an embodiment, when the bezel 1601 is rotated (e.g., clockwise or counterclockwise) in a state in which the icon 1620 is displayed, the wearable electronic device 1600 may display a UI 1640 for switch between the front/rear cameras, in place of the icon 1620. For example, the UI 1640 for switching between the front/rear cameras may include a UI 1641 for selecting the front camera and a UI 1642 for selecting the rear camera.

According to an embodiment, the wearable electronic device 1600 may select a UI 1641 for selecting the front camera and a UI 1642 for selecting the rear camera, based on an input of rotating the bezel 1601.

According to an embodiment, the wearable electronic device 1600 may transmit information related to the selected front or rear camera to the electronic device (e.g., the electronic device 101 of FIG. 1). According to an embodiment, the electronic device may change the activated camera based on the camera information received from the wearable electronic device 1600.

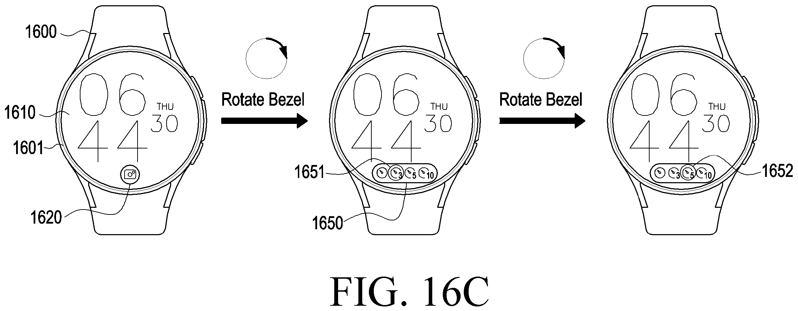

FIG. 16C is a view illustrating an operation of performing a function based on bezel rotation in a state in which an icon associated with control of the camera is displayed, by a wearable electronic device according to an embodiment.

Referring to FIG. 16C, a wearable electronic device 1600 (e.g., the electronic device 104 of FIG. 1, the electronic device 500 of FIG. 5, or the electronic device 700 of FIG. 7) may display an icon 1620 on a pre-displayed screen 1610 as an upper layer of the pre-displayed screen 1610. According to an embodiment, the wearable electronic device 1600 may include a bezel 1601 (e.g., the wheel key 502 of FIG. 5 or the wheel key 720 of FIG. 7) disposed to be rotatable along the boundary of the display.

For example, the icon 1620 may be displayed according to a command for displaying an icon for executing the camera controller transmitted from the electronic device to the wearable electronic device 1600, based on the camera application of the electronic device (e.g., the electronic device 101 of FIG. 1) being executed and the mounted state (e.g., the folding state) being a fixed state (e.g., the flex mode). For example, the icon 1620 may be displayed on the lower end of the display of the external electronic device 1600.

According to an embodiment, when the bezel 1601 is rotated (e.g., clockwise or counterclockwise) in a state in which the icon 1620 is displayed, the wearable electronic device 1600 may display a UI 1650 for changing the timer setting, in place of the icon 1620. For example, the UI 1650 for changing the timer setting may include a 3-second timer 1651, a 5-second timer 1652, and a 10-second timer. The type and number of timers are not limited thereto.

According to an embodiment, the wearable electronic device 1600 may select the 3-second timer 1651, the 5-second timer 1652, and the 10-second timer based on an input of rotating the bezel 1601.

According to an embodiment, the wearable electronic device 1600 may transmit information related to the set timer to the electronic device (e.g., the electronic device 101 of FIG. 1). According to an embodiment, the electronic device may set the timer based on timer information received from the wearable electronic device 1600.

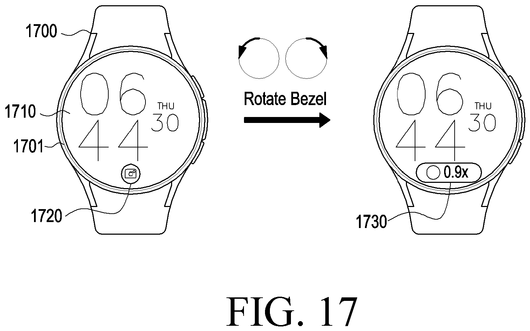

FIG. 17 is a view illustrating an operation of performing a function based on bezel rotation in a state in which an icon associated with control of the camera is displayed, by a wearable electronic device according to an embodiment.

Referring to FIG. 17, a wearable electronic device 1700 (e.g., the electronic device 104 of FIG. 1, the electronic device 500 of FIG. 5, or the electronic device 700 of FIG. 7) may display an icon 1720 on a pre-displayed screen 1710 as an upper layer of the pre-displayed screen 1710. According to an embodiment, the wearable electronic device 1700 may include a bezel 1701 (e.g., the wheel key 502 of FIG. 5 or the wheel key 720 of FIG. 7) disposed to be rotatable along the boundary of the display.

For example, the icon 1720 may be displayed according to a command for displaying an icon for executing the camera controller transmitted from the electronic device to the wearable electronic device 1700, based on the camera application of the electronic device (e.g., the electronic device 101 of FIG. 1) being executed and the mounted state (e.g., the folding state) being a fixed state (e.g., the flex mode). For example, the icon 1720 may be displayed on the lower end of the display of the external electronic device 1700.

According to an embodiment, when the bezel 1701 is rotated (e.g., clockwise or counterclockwise) in a state in which the icon 1720 is displayed, the wearable electronic device 1700 may display a UI 1730 for setting a zoom level, in place of the icon 1720.

According to an embodiment, the wearable electronic device 1700 may set a zoom level based on an input of rotating the bezel 1701. For example, the wearable electronic device 1700 may increase the zoom level when the bezel 1701 is rotated clockwise, and may decrease the zoom level when the bezel 1701 is rotated counterclockwise.

According to an embodiment, the wearable electronic device 1700 may transmit information related to the changed zoom level to the electronic device (e.g., the electronic device 101 of FIG. 1). According to an embodiment, the electronic device may change the zoom level based on the zoom level information received from the wearable electronic device 1700.

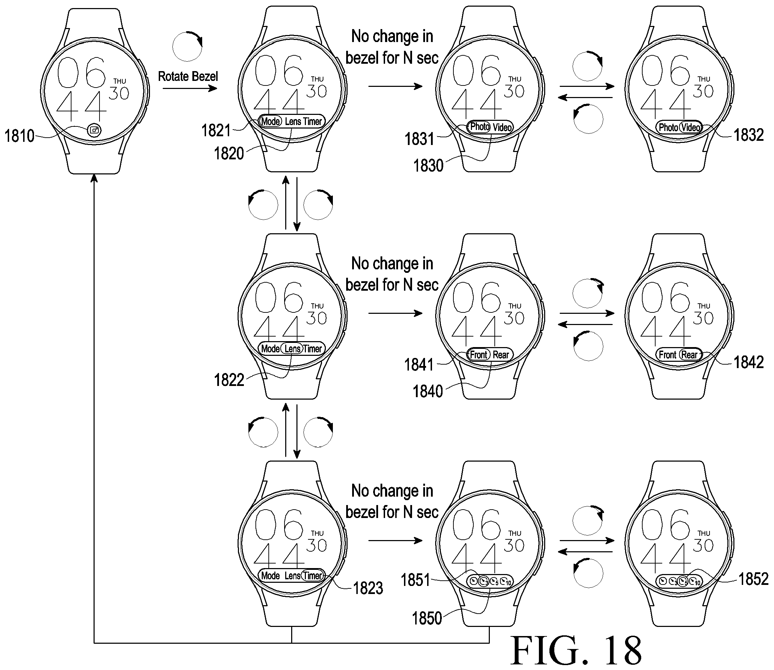

FIG. 18 is a view illustrating an operation of performing a function based on bezel rotation in a state in which an icon for control of the camera is displayed, by a wearable electronic device according to an embodiment. For example, FIG. 18 illustrates a combined embodiment of the embodiments of FIGS. 16A to 16C.

Referring to FIG. 18, a wearable electronic device (e.g., the electronic device 104 of FIG. 1, the electronic device 500 of FIG. 5, or the electronic device 700 of FIG. 7) may display an icon 1810 on a pre-displayed screen as an upper layer of the pre-displayed screen. According to an embodiment, the wearable electronic device may include a bezel (e.g., the wheel key 502 of FIG. 5 or the wheel key 720 of FIG. 7) disposed to be rotatable along the boundary of the display.

For example, the icon 1810 may be displayed according to a command for displaying an icon for executing the camera controller transmitted from the electronic device to the wearable electronic device, based on the camera application of the electronic device (e.g., the electronic device 101 of FIG. 1) being executed and the mounted state (e.g., the folding state) being a fixed state (e.g., the flex mode). For example, the icon 1810 may be displayed on the lower end of the display of the external electronic device.

According to an embodiment, when the bezel is rotated (e.g., clockwise or counterclockwise) in a state in which the icon 1810 is displayed, the wearable electronic device may display a UI 1820 including at least one selectable function, in place of the icon 1810. For example, the UI 1820 including at least one selectable function may include at least one of a UI 1821 for selecting a capturing mode, a UI 1822 for selecting a capturing camera (e.g. lens), and a UI 1823 for setting a timer. According to an embodiment, the type and number of functions included in the UI 1820 including at least one selectable function are not limited thereto.

According to an embodiment, when there is no bezel rotation for N seconds (sec) in the state in which the UI 1821 for selecting the capturing mode is selected, the wearable electronic device may display a UI 1830 for changing the camera capturing mode in place of the UI 1820 including at least one selectable function. For example, the UI 1830 for changing the camera capturing mode may include a UI 1831 for selecting a photo mode and a UI 1832 for selecting a video mode.

According to an embodiment, the wearable electronic device may select a UI 1831 for selecting the photo mode and a UI 1832 for selecting the video mode, based on an input of rotating the bezel.

According to an embodiment, when there is no bezel rotation for N seconds (sec) in a state in which the UI 1822 for selecting the capturing camera is selected, the wearable electronic device may display a UI 1840 for switching between the front/rear cameras, in place of the UI 1822 for selecting the capturing camera (lens).

For example, the UI 1840 for switching between the front/rear cameras may include a UI 1841 for selecting the front camera and a UI 1842 for selecting the rear camera.

According to an embodiment, the wearable electronic device may select a UI 1841 for selecting the front camera and a UI 1842 for selecting the rear camera, based on an input of rotating the bezel.

According to an embodiment, when there is no bezel rotation for N seconds (sec) in the state in which the UI 1823 for timer setting is selected, the wearable electronic device may display the UI 1850 for changing the timer setting in place of the UI 1823 for timer setting. For example, the UI 1850 for changing the timer setting may include a 3-second timer 1851, a 5-second timer 1852, and a 10-second timer. The type and number of timers are not limited thereto.

According to an embodiment, the wearable electronic device may select the 3-second timer 1851, the 5-second timer 1852, and the 10-second timer based on an input of rotating the bezel.

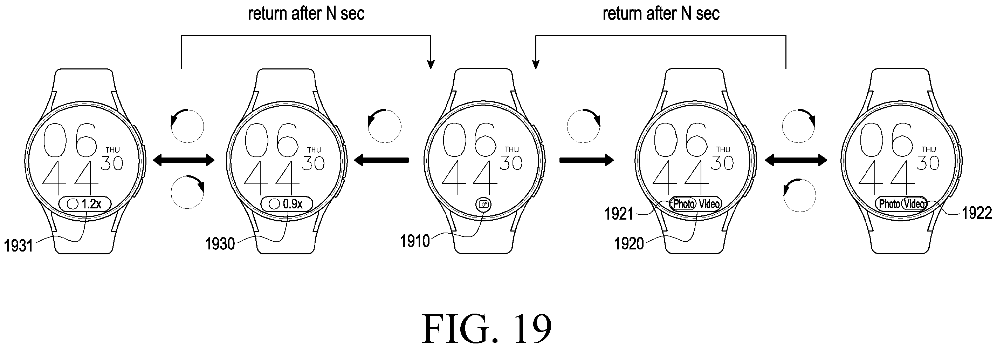

FIG. 19 is a view illustrating an operation of performing a function based on bezel rotation in a state in which an icon associated with control of the camera is displayed, by a wearable electronic device according to an embodiment.

Referring to FIG. 19, a wearable electronic device (e.g., the electronic device 104 of FIG. 1, the electronic device 500 of FIG. 5, or the electronic device 700 of FIG. 7) may display an icon 1910 on a pre-displayed screen as an upper layer of the pre-displayed screen. According to an embodiment, the wearable electronic device may include a bezel (e.g., the wheel key 502 of FIG. 5 or the wheel key 720 of FIG. 7) disposed to be rotatable along the boundary of the display.

For example, the icon 1910 may be displayed according to a command for displaying an icon for executing the camera controller transmitted from the electronic device to the wearable electronic device, based on the camera application of the electronic device (e.g., the electronic device 101 of FIG. 1) being executed and the mounted state (e.g., the folding state) being a fixed state (e.g., the flex mode). For example, the icon 1910 may be displayed on the lower end of the display of the external electronic device.

According to an embodiment, when the bezel is rotated (e.g., clockwise or counterclockwise) in a state in which the icon 1910 is displayed, the wearable electronic device may display UIs 1920 and 1930 related to functions corresponding to the rotation direction of the bezel in place of the icon 1910. For example, the clockwise rotation of the bezel may correspond to the capturing mode switching function, and the counterclockwise rotation of the bezel may correspond to the zoom setting function. According to an embodiment, the function corresponding to the rotation direction of the bezel is not limited thereto.

According to an embodiment, when the bezel is rotated clockwise in a state in which the icon 1910 is displayed, the wearable electronic device may display a UI 1920 for selecting the capturing mode in place of the icon 1910. For example, the UI 1920 for changing the camera capturing mode may include a UI 1921 for selecting a photo mode and a UI 1922 for selecting a video mode.

According to an embodiment, the wearable electronic device may select a UI 1921 for selecting the photo mode and a UI 1922 for selecting the video mode, based on an input of rotating the bezel.

According to an embodiment, when there is no bezel rotation for the set n seconds after entering the capturing mode switch function, the wearable electronic device may switch the UI 1920 for selecting the capturing mode back to the icon 1910.

According to an embodiment, when the bezel is rotated counterclockwise in a state in which the icon 1910 is displayed, the wearable electronic device may display a UI 1930 for zoom setting in place of the icon 1910. For example, the UI 1930 for zoom setting may include information about the current zoom level (e.g., 0.9x).

According to an embodiment, the wearable electronic device may display a UI 1931 including a changed zoom level (e.g., 1.2x) based on an input for rotating the bezel.

According to an embodiment, when there is no bezel rotation for the set n seconds after entering the zoom setting function, the wearable electronic device may switch the UI 1930 for zoom setting back to the icon 1910.

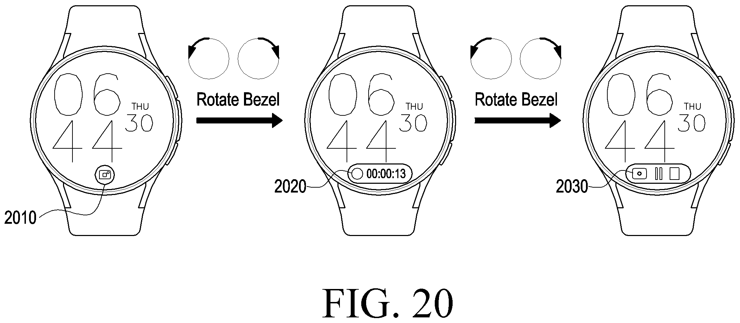

FIG. 20 is a view illustrating an operation of performing a function based on bezel rotation in a state in which an icon associated with control of the camera is displayed, by a wearable electronic device according to an embodiment.

Referring to FIG. 20, a wearable electronic device (e.g., the electronic device 104 of FIG. 1, the electronic device 500 of FIG. 5, or the electronic device 700 of FIG. 7) may display an icon 2010 on a pre-displayed screen as an upper layer of the pre-displayed screen. According to an embodiment, the wearable electronic device may include a bezel (e.g., the wheel key 502 of FIG. 5 or the wheel key 720 of FIG. 7) disposed to be rotatable along the boundary of the display.

For example, the icon 2010 may be displayed according to a command for displaying an icon for executing the camera controller transmitted from the electronic device to the wearable electronic device, based on the camera application of the electronic device (e.g., the electronic device 101 of FIG. 1) being executed and the mounted state (e.g., the folding state) being a fixed state (e.g., the flex mode). For example, the icon 2010 may be displayed on the lower end of the display of the external electronic device.

According to an embodiment, when the bezel is rotated (e.g., clockwise or counterclockwise) in a state in which the icon 2010 is displayed, the wearable electronic device may display a UI 2020 related to a first function, in place of the icon 2010. For example, when video recording is being performed in the camera application of the electronic device (e.g., the electronic device 101 of FIG. 1 or the electronic device 200 of FIG. 2) connected to the wearable electronic device, the wearable electronic device may display a UI 2020 related to the recording time in place of the icon 2010 based on the rotation of the bezel.

According to an embodiment, when the bezel is rotated (e.g., clockwise or counterclockwise) in a state in which the UI 2020 related to the first function is displayed, the wearable electronic device may replace the UI 2020 related to the first function with the UI 2030 related to the second function and display the UI 2030 based on the rotation of the bezel. For example, the UI 2020 related to the recording time may be replaced with a UI 2030 including a button for controlling video which may then be displayed.

As such, it is possible to control the function of executing the camera controller application based on the rotation of the bezel of the wearable electronic device.

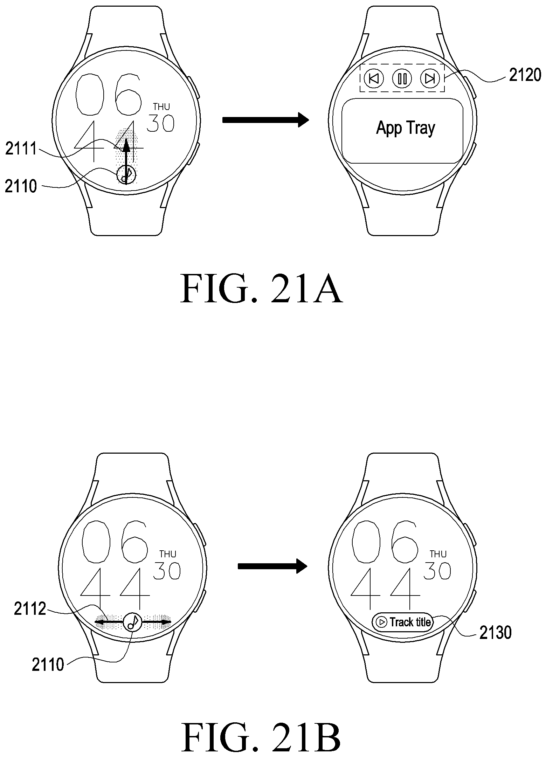

FIG. 21A is a view illustrating an operation of performing a function based on a user input received through an icon associated with control of an application (e.g. a media application) executed at the electronic device, by a wearable electronic device according to an embodiment.

Referring to FIG. 21A, a wearable electronic device (e.g., the electronic device 104 of FIG. 1, the electronic device 500 of FIG. 5, or the electronic device 700 of FIG. 7) may display an icon 2110 on a pre-displayed screen as an upper layer of the pre-displayed screen. For example, the icon 2110 may be displayed according to a command for displaying an icon (e.g., an ongoing icon) for executing a media controller for controlling a media application being executed in an electronic device (e.g., the electronic device 101 of FIG. 1). For example, the icon 2110 may be displayed on the lower end of the display of the external electronic device.

According to an embodiment, based on a drag input 2111 of touching and moving the icon 2110 while remaining touched, the wearable electronic device may perform a function corresponding to the drag input 2111. For example, the wearable electronic device may display the plurality of UIs 2120 related to control of the media application, based on an input 2111 of dragging upward the icon 2110 displayed on the lower end of the wearable electronic device. For example, the plurality of UIs 2120 may include a previous button, a pause/play button, and a next button. For example, the plurality of UIs 2120 may be displayed on an upper end of an application tray including a plurality of applications installed in the wearable electronic device.

FIG. 21B is a view illustrating an operation of performing a function based on a user input received through an icon associated with control of an application (e.g. a media application) executed at the electronic device, by a wearable electronic device according to an embodiment.

Referring to FIG. 21B, the wearable electronic device may perform a function corresponding to a pinch-out input 2112, based on the pinch-out input 2112 to the icon 2110. For example, based on the pinch-out input 2112 to the icon 2110 displayed on the lower end of the wearable electronic device, the wearable electronic device may display a UI 2130 including information related to content currently being played in the electronic device communicatively connected to the wearable electronic device, in place of the icon 2110. For example, the UI 2130 including information related to content currently being played in the electronic device may include a content name (e.g., a song name) and information (e.g., an application icon) about the application playing the content.

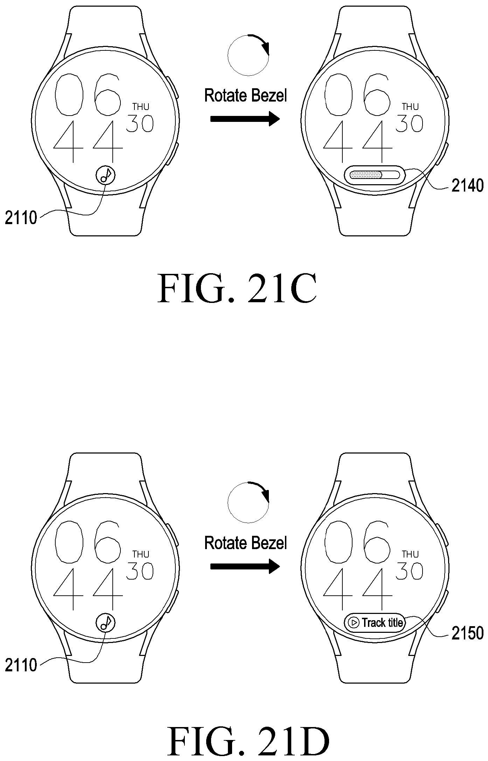

FIG. 21C is a view illustrating an operation of performing a function based on bezel rotation in a state in which an icon associated with control of an application (e.g. a media application) executed at the electronic device is displayed, by a wearable electronic device according to an embodiment.

Referring to FIG. 21C, when the bezel (e.g., the wheel key 502 of FIG. 5 or the wheel key 720 of FIG. 7) of the wearable electronic device is rotated in a state in which the icon 2110 is displayed, the wearable electronic device may display a UI 2140 related to the volume of content currently being played in the electronic device communicatively connected to the wearable electronic device in place of the icon 2110, and may control the volume.

FIG. 21D is a view illustrating an operation of performing a function based on bezel rotation in a state in which an icon associated with control of an application (e.g. a media application) executed at the electronic device is displayed, by a wearable electronic device according to an embodiment.

Referring to FIG. 21D, when the bezel (e.g., the wheel key 502 of FIG. 5 or the wheel key 720 of FIG. 7) of the wearable electronic device is rotated in a state in which the icon 2110 is displayed, the wearable electronic device may display a UI 2150 including information related to the content being currently played in the electronic device communicatively connected to the wearable electronic device in place of the icon 2110. For example, the UI 2150 including information related to content currently being played in the electronic device may include a content name (e.g., a song name) and information (e.g., an application icon) about the application playing the content.

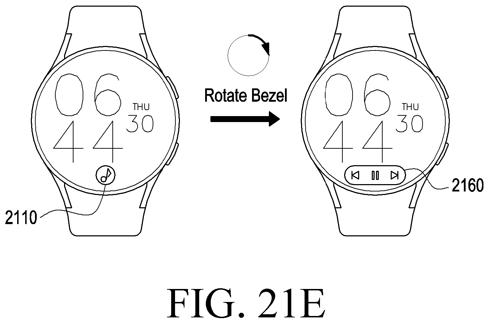

FIG. 21E is a view illustrating an operation of performing a function based on bezel rotation in a state in which an icon associated with control of an application (e.g. a media application) executed at the electronic device is displayed, by a wearable electronic device according to an embodiment.

Referring to FIG. 21E, when the bezel (e.g., the wheel key 502 of FIG. 5 or the wheel key 720 of FIG. 7) of the wearable electronic device is rotated in a state in which the icon 2110 is displayed, the wearable electronic device may display a UI 2160 related to control of the media application being currently played in the electronic device communicatively connected to the wearable electronic device in place of the icon 2110. For example, the plurality of UIs 2160 may include a previous button, a pause/play button, and a next button.

Although the control of an application executing at the electronic device via an icon displayed at the external device has predominantly been described with reference to camera and media reproduction applications, the present disclosure is not limited to only these types of applications and applies to any application where the user may use or view the applications on the electronic device whilst separated from the electronic device (e.g. at a distance from which they cannot directly/physically interact with the electronic device).

As described above, the wearable electronic device may provide a UI related to the function of the application even if the execution screen of the application is not displayed through a user input to the ongoing icon.

According to an embodiment, an electronic device may comprise a first housing and a second housing, a hinge rotatably connecting the first housing and the second housing, a flexible display exposed through a first portion of the first housing and a second portion of the second housing, at least one sensor, a camera, a communication module, memory storing instructions, and a processor.

According to an embodiment, the instructions may, when executed by the processor, cause the electronic device to execute a first application for controlling the camera.

According to an embodiment, the at least one processor may identify a folding angle of the electronic device through the at least one sensor.

According to an embodiment, the instructions may, when executed by the processor to cause the electronic device to transmit, to an external electronic device, a command for displaying an icon related to the first application on a display of the external electronic device connected through the communication module, based on not detecting a movement of the electronic device during a set time after the folding angle is included in a designated range in a state in which the first application is executed.

According to an embodiment, the instructions may, when executed by the processor, cause the electronic device to receive a request for information related to a function being executed on the first application from the external electronic device.

According to an embodiment, the instructions may, when executed by the processor, cause the electronic device to transmit the information related to the function being executed on the first application to the external electronic device, based on receiving the request.

According to an embodiment, the instructions may, when executed by the processor, cause the electronic device to transmit, to the external electronic device, the command for displaying the icon, based on the folding angle being included in the designated range after fully folded or fully unfolded in the state in which the first application is executed.

According to an embodiment, the instructions may, when executed by the processor, cause the electronic device to transmit, to the external electronic device, a command for executing an application of the external electronic device related to the first application, based on receiving an input for capture through the first application after transmitting the command for displaying the icon to the external electronic device.

According to an embodiment, the icon may be displayed as an upper layer on a screen of the external electronic device, and be for executing an application of the external electronic device for controlling the first application.

According to an embodiment, the instructions may, when executed by the processor, cause the electronic device to transmit, to the external electronic device, a command for deleting the icon, based on detecting that the folding angle of the electronic device falls outside the designated range through the at least one sensor after transmitting the command for displaying the icon to the external electronic device.

According to an embodiment, the instructions may, when executed by the processor, cause the electronic device to transmit, to the external electronic device, a command for deleting the icon, based on the execution of the first application being terminated after transmitting the command for displaying the icon to the external electronic device.

According to an embodiment, the instructions may, when executed by the processor, cause the electronic device to, based on receiving a control command of the first application from the external electronic device through the communication module, perform a function corresponding to the control command.

According to an embodiment, a wearable electronic device may comprise a communication module, a display, memory storing instructions, and a processor.

According to an embodiment, the instructions may, when executed by the processor, cause the wearable electronic device to display a home screen or an execution screen of a first application.

According to an embodiment, the instructions may, when executed by the processor, cause the wearable electronic device to display an icon related to a second application related to a camera of an external electronic device as a upper layer of the home screen or the execution screen of the first application, based on receiving a command for displaying the icon from the external electronic device connected through the communication module.

According to an embodiment, the instructions may, when executed by the processor, cause the wearable electronic device to, based on a change from the home screen or the execution screen of the first application to another screen in a state in which the icon is displayed, maintain the icon as the upper layer of the changed screen.

According to an embodiment, the instructions may, when executed by the processor, cause the wearable electronic device to transmit, to the external electronic device, a request for information related to a function being executed on the second application of the external electronic device, based on receiving a user input for selecting the icon.

According to an embodiment, the instructions may, when executed by the processor, cause the wearable electronic device to receive the information related to the function being executed on the second application of the external electronic device from the external electronic device.

According to an embodiment, the instructions may, when executed by the processor, cause the wearable electronic device to display an execution screen of a third application for controlling the second application of the external electronic device based on the received information.

According to an embodiment, the instructions may, when executed by the processor, cause the wearable electronic device to, based on receiving an execution command of a third application for controlling a second application of the external electronic device through the communication module in a state in which the icon is displayed display an execution screen of the third application for controlling the second application of the external electronic device.

According to an embodiment, the instructions may, when executed by the processor, cause the wearable electronic device to, based on receiving an input dragging after touching the icon, execute a function corresponding to the input of dragging.

According to an embodiment, the instructions may, when executed by the processor, cause the wearable electronic device to display a UI for executing a function corresponding to a function being executed of the second application of the external electronic device received through the communication module, based on receiving a zoom-in or zoom-out operation for the icon.

According to an embodiment, the wearable electronic device may further comprise a bezel rotatably disposed along a boundary of the display.

According to an embodiment, the instructions may, when executed by the processor, cause the wearable electronic device to, based on detecting rotation of the bezel, replace the icon with at least one UI related to a function corresponding to a direction of rotation of the bezel and display the at least one UI.

According to an embodiment, a method for controlling an electronic device may comprise executing a first application for controlling a camera of the electronic device.

According to an embodiment, the method for controlling the electronic device may comprise identifying a folding angle of the electronic device through at least one sensor of the electronic device.

According to an embodiment, the method for controlling the electronic device may comprise transmitting, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.

According to an embodiment, the method for controlling the electronic device may comprise receiving a request for information related to a function being executed on the first application from the external electronic device.

According to an embodiment, the method for controlling the electronic device may further comprise transmitting the information related to the function being executed on the first application to the external electronic device, based on receiving the request.

According to an embodiment, transmitting the command to the external electronic device may transmit, to the external electronic device, the command for displaying the icon, based on the folding angle being included in the designated range after fully folded or fully unfolded in the state in which the first application is executed.

According to an embodiment, the method for controlling the electronic device may further comprise transmitting, to the external electronic device, a command for executing an application of the external electronic device related to the first application, based on receiving an input for capture through the first application after transmitting the command for displaying the icon to the external electronic device.

According to an embodiment, the icon may be displayed as an upper layer on a screen of the external electronic device, and be for executing an application of the external electronic device for controlling the first application.

According to an embodiment, the method for controlling the electronic device may further comprise transmitting, to the external electronic device, a command for deleting the icon, based on detecting that the folding angle of the electronic device falls outside the designated range through the at least one sensor after transmitting the command for displaying the icon to the external electronic device.

According to an embodiment, the method for controlling the electronic device may further comprise transmitting, to the external electronic device, a command for deleting the icon, based on the execution of the first application being terminated after transmitting the command for displaying the icon to the external electronic device.

According to an embodiment, the method for controlling the electronic device may further comprise, based on receiving a control command of the first application from the external electronic device through the communication module, performing a function corresponding to the control command.

According to an embodiment, a method for controlling a wearable electronic device may comprise displaying a home screen or an execution screen of a first application.

According to an embodiment, the method for controlling the wearable electronic device may comprise displaying, based on receiving a command for displaying an icon related to a second application related to a camera of an external electronic device from an external electronic device connected through the communication module, the icon as an upper layer of the home screen or the execution screen of the first application.

According to an embodiment, the method for controlling the wearable electronic device may further comprise, based on a change from the home screen or the execution screen of the first application to another screen in a state in which the icon is displayed, maintaining the icon as the upper layer of the changed screen.

According to an embodiment, the method for controlling the wearable electronic device may further comprise transmitting, to the external electronic device, a request for information related to a function being executed on the second application of the external electronic device, based on receiving a user input for selecting the icon.

According to an embodiment, the method for controlling the wearable electronic device may further comprise receiving the information related to the function being executed on the second application of the external electronic device from the external electronic device.

According to an embodiment, the method for controlling the wearable electronic device may further comprise displaying an execution screen of a third application for controlling the second application of the external electronic device based on the received information.

According to an embodiment, the method for controlling the wearable electronic device may further comprise, based on receiving an execution command of a third application for controlling a second application of the external electronic device through the communication module in a state in which the icon is displayed, displaying an execution screen of the third application for controlling the second application of the external electronic device.

According to an embodiment, the method for controlling the wearable electronic device may further comprise, based on receiving an input of dragging after touching the icon, executing a function corresponding to the input of dragging.

According to an embodiment, the method for controlling the wearable electronic device may further comprise displaying a UI for executing a function corresponding to a function being executed of the second application of the external electronic device received through the communication module, based on receiving a zoom-in or zoom-out operation for the icon.

According to an embodiment, the wearable electronic device may further comprise a bezel rotatably disposed along a boundary of the display.

According to an embodiment, the method for controlling the wearable electronic device may further comprise, based on detecting rotation of the bezel, replacing the icon with at least one UI related to a function corresponding to a direction of rotation of the bezel and displaying the at least one UI.

According to an embodiment, in a non-transitory computer-readable recording medium storing one or more programs, the one or more programs may include instructions enabling an electronic device to execute a first application for controlling a camera of the electronic device.

According to an embodiment, the one or more programs may include instructions enabling the electronic device to identify a folding angle of the electronic device through at least one sensor of the electronic device.

According to an embodiment, the one or more programs may include instructions enabling the electronic device to transmit, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.

According to an embodiment, the one or more programs may include instructions enabling the electronic device to receive a request for information related to a function being executed on the first application from the external electronic device.

According to an embodiment, the one or more programs may include instructions enabling the electronic device to transmit the information related to the function being executed on the first application to the external electronic device, based on receiving the request.

According to an embodiment, the one or more programs may include instructions enabling the electronic device to transmit, to the external electronic device, the command for displaying the icon, based on the folding angle being included in the designated range after fully folded or fully unfolded in the state in which the first application is executed.

According to an embodiment, the one or more programs may include instructions enabling the electronic device to transmit, to the external electronic device, a command for executing an application of the external electronic device related to the first application, based on receiving an input for capture through the first application after transmitting the command for displaying the icon to the external electronic device.

According to an embodiment, the icon may be displayed as an upper layer on a screen of the external electronic device, and be for executing an application of the external electronic device for controlling the first application.

According to an embodiment, the one or more programs may include instructions enabling the electronic device to transmit, to the external electronic device, a command for deleting the icon, based on detecting that the folding angle of the electronic device falls outside the designated range through the at least one sensor after transmitting the command for displaying the icon to the external electronic device.

According to an embodiment, the one or more programs may include instructions enabling the electronic device to transmit, to the external electronic device, a command for deleting the icon, based on the execution of the first application being terminated after transmitting the command for displaying the icon to the external electronic device.

According to an embodiment, the one or more programs may include instructions enabling the electronic device to, based on receiving a control command of the first application from the external electronic device through the communication module, perform a function corresponding to the control command.

According to an embodiment, in a non-transitory computer-readable recording medium storing one or more programs, the one or more programs may include instructions enabling a wearable electronic device to a home screen or an execution screen of a first application.

According to an embodiment, the one or more programs may include instructions enabling the wearable electronic device to display, based on receiving a command for displaying an icon related to a second application related to a camera of an external electronic device from the external electronic device connected through the communication module, the icon as an upper layer of the home screen or the execution screen of the first application.

According to an embodiment, the one or more programs may include instructions enabling the wearable electronic device to, based on a change from the home screen or the execution screen of the first application to another screen in a state in which the icon is displayed, maintain the icon as the upper layer of the changed screen.

According to an embodiment, the one or more programs may include instructions enabling the wearable electronic device to transmit, to the external electronic device, a request for information related to a function being executed on the second application of the external electronic device, based on receiving a user input for selecting the icon.

According to an embodiment, the one or more programs may include instructions enabling the wearable electronic device to receive the information related to the function being executed on the second application of the external electronic device from the external electronic device.

According to an embodiment, the one or more programs may include instructions enabling the wearable electronic device to display an execution screen of a third application for controlling the second application of the external electronic device based on the received information.

According to an embodiment, the one or more programs may include instructions enabling the wearable electronic device to, based on receiving an execution command of a third application for controlling a second application of the external electronic device through the communication module in a state in which the icon is displayed, display an execution screen of the third application for controlling the second application of the external electronic device.

According to an embodiment, the one or more programs may include instructions enabling the wearable electronic device to, based on receiving an input of dragging after touching the icon, execute a function corresponding to the input of dragging.

According to an embodiment, the one or more programs may include instructions enabling the wearable electronic device to display a UI for executing a function corresponding to a function being executed of the second application of the external electronic device received through the communication module, based on receiving a zoom-in or zoom-out operation for the icon.

According to an embodiment, the wearable electronic device may further comprise a bezel rotatably disposed along a boundary of the display.

According to an embodiment, the one or more programs may include instructions enabling the wearable electronic device to, based on detecting rotation of the bezel, replace the icon with at least one UI related to a function corresponding to a direction of rotation of the bezel and display the at least one UI.

All combinations of feature and embodiments of the present disclosure should be taken to fall within the scope of the present disclosure unless such features/embodiment/combinations are incompatible or clearly indicated and as not falling within the scope of the present disclosure.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Further examples of the present disclosure are set out in the following numbered paragraphs.
1. An electronic device, comprising:
   a first housing and a second housing;
   a hinge rotatably connecting the first housing and the second housing;
   a flexible display exposed through a first portion of the first housing and a second portion of the second housing;
   at least one sensor;
   a camera;
   a communication module;
   memory storing instructions; and
   a processor,
   wherein the instructions, when executed by the processor, cause the electronic device to:
      execute a first application for controlling the camera;
      identify a folding angle of the electronic device through the at least one sensor; and
      transmit, to an external electronic device, a command for displaying an icon related to the first application on a display of the external electronic device connected through the communication module, based on not detecting a movement of the electronic device during a set time after the folding angle is included in a designated range in a state in which the first application is executed.
2. The electronic device of paragraph 1,
   wherein the instructions, when executed by the processor, cause the electronic device to:
   receive a request for information related to a function being executed on the first application from the external electronic device; and
   transmit the information related to the function being executed on the first application to the external electronic device, based on receiving the request.
3. The electronic device of paragraph 1 or 2,
   wherein the instructions, when executed by the processor, cause the electronic device to,
   transmit, to the external electronic device, the command for displaying the icon, based on the folding angle being included in the designated range after fully folded or fully unfolded in the state in which the first application is executed.
4. The electronic device of any one of paragraphs 1 to 3,
   wherein the instructions, when executed by the processor, cause the electronic device to,
   transmit, to the external electronic device, a command for executing an application of the external electronic device related to the first application, based on receiving an input for capture through the first application after transmitting the command for displaying the icon to the external electronic device.
5. The electronic device of any one of paragraphs 1 to 4,
   wherein the icon is displayed as an upper layer on a screen of the external electronic device, and is for executing an application of the external electronic device for controlling the first application.
6. The electronic device of any one of paragraphs 1 to 5,
   wherein the instructions, when executed by the processor, cause the electronic device to,
   transmit, to the external electronic device, a command for deleting the icon, based on detecting that the folding angle of the electronic device falls outside the designated range through the at least one sensor after transmitting the command for displaying the icon to the external electronic device.
7. The electronic device of any one of paragraphs 1 to 5,
   wherein the instructions, when executed by the processor, cause the electronic device to,
   transmit, to the external electronic device, a command for deleting the icon, based on the execution of the first application being terminated after transmitting the command for displaying the icon to the external electronic device.
8. The electronic device of any one of paragraphs 1 to 7,
   wherein the instructions, when executed by the processor, cause the electronic device to,
   based on receiving a control command of the first application from the external electronic device through the communication module, perform a function corresponding to the control command,.
9. A wearable electronic device, comprising:
   a communication module;
   a display;
   memory storing instructions; and
   a processor,
   wherein the instructions, when executed by the processor, cause the wearable electronic device to:
      display a home screen or an execution screen of a first application; and
      display, based on receiving a command for displaying an icon related to a second application related to a camera of an external electronic device from an external electronic device connected through the communication module, the icon as an upper layer of the home screen or the execution screen of the first application.
10. The wearable electronic device of paragraph 9,
   wherein the instructions, when executed by the processor, cause the wearable electronic device to
   based on a change from the home screen or the execution screen of the first application to another screen in a state in which the icon is displayed, maintain the icon as the upper layer of the changed screen.
11. The wearable electronic device of paragraphs 9 or 10,
   wherein the instructions, when executed by the processor, cause the wearable electronic device to:
   transmit, to the external electronic device, a request for information related to a function being executed on the second application of the external electronic device, based on receiving a user input for selecting the icon;
   receive the information related to the function being executed on the second application of the external electronic device from the external electronic device; and
   display an execution screen of a third application for controlling the second application of the external electronic device based on the received information.
12. The wearable device of any one of paragraphs 9 to 11,
   wherein the instructions, when executed by the processor, cause the wearable electronic device to,
   based on receiving an execution command of a third application for controlling a second application of the external electronic device through the communication module in a state in which the icon is displayed, display an execution screen of the third application for controlling the second application of the external electronic device,.
13. The wearable device of any one of paragraphs 9 to 12,
   wherein the instructions, when executed by the processor, cause the wearable electronic device to,
   based on receiving an input of dragging after touching the icon, execute a function corresponding to the input of dragging.
14. The wearable device of any one of paragraphs 9 to 13,
   wherein the instructions, when executed by the processor, cause the wearable electronic device to,
   display a UI for executing a function corresponding to a function being executed of the second application of the external electronic device received through the communication module, based on receiving a zoom-in or zoom-out operation for the icon.
15. The wearable device of any one of paragraphs 9 to 14, further comprising
   a bezel rotatably disposed along a boundary of the display,
   wherein the instructions, when executed by the processor, cause the wearable electronic device to:
      based on detecting rotation of the bezel,
      replace the icon with at least one UI related to a function corresponding to a direction of rotation of the bezel and display the at least one UI.
16. A method for controlling an electronic device, the method comprising:
   executing a first application for controlling a camera of the electronic device;
   identifying a folding angle of the electronic device through at least one sensor of the electronic device; and
   transmitting, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.
17. The method of paragraph 16, further comprising:
   receiving a request for information related to a function being executed on the first application from the external electronic device; and
   transmitting the information related to the function being executed on the first application to the external electronic device, based on receiving the request.
18. The method of paragraphs 16 or 17,
   wherein transmitting the command to the external electronic device
   transmits, to the external electronic device, the command for displaying the icon, based on the folding angle being included in the designated range after fully folded or fully unfolded in the state in which the first application is executed, and
   wherein the icon is displayed as an upper layer on a screen of the external electronic device, and is for executing an application of the external electronic device for controlling the first application.
19. The method of any one of paragraphs 16 to 18, further comprising
   transmitting, to the external electronic device, a command for executing an application of the external electronic device related to the first application, based on receiving an input for capture through the first application after transmitting the command for displaying the icon to the external electronic device.
20. A non-transitory computer-readable recording medium storing one or more programs, the one or more programs including instructions enabling an electronic device to: execute a first application for controlling a camera of the electronic device;
   identify a folding angle of the electronic device through at least one sensor of the electronic device; and
   transmit, to an external electronic device, a command for displaying an icon related to the first application on a display of the external electronic device connected through a communication module of the electronic device, based on not detecting a movement of the electronic device during a set time after the folding angle is included in a designated range in a state in which the first application is executed.
21. An electronic device, comprising:
   a display;
   at least one sensor;
   a communication module;
   memory storing instructions; and
   a processor,
   wherein the instructions, when executed by the processor, cause the electronic device to:
      execute a first application;
      identify a mounting state of the electronic device through the at least one sensor; and
      based on the identified mounting state and execution of the first application, transmit, to an external electronic device connected through the communication module, a command for displaying an icon related to control of the first application on a display of the external electronic device.
22. The electronic device of claim 21,
   wherein the instructions, when executed by the processor, cause the electronic device to:
   receive a request for information related to a function being executed on the first application from the external electronic device; and
   transmit the information related to the function being executed on the first application to the external electronic device, based on receiving the request.
23. The electronic device of claims 21 or 22, wherein the electronic device comprises:
   a first housing and a second housing; and
   a hinge rotatably connecting the first housing and the second housing, and wherein the display is a flexible display exposed through a first portion of the first housing and a second portion of the second housing, and the mounting state includes a folding angle between the first housing and the second housing.
24. The electronic device of claim 23, wherein the instructions, when executed by the processor, cause the electronic device to;
   transmit, to the external electronic device, the command for displaying the icon, based on the folding angle being within a designated range.
25. The electronic device of claim 24, wherein the instructions, when executed by the processor, cause the electronic device to;
   transmit, to the external electronic device, the command for displaying the icon, based on the folding angle being within the designated range for a certain time.
26. The electronic device of claims 24 or 25, wherein the instructions, when executed by the processor, cause the electronic device to;
   transmit, to the external electronic device, the command for displaying the icon, based on the electronic device being stationary for a set time after the folding angle is within the designated range.
27. The electronic device of any of claims 24 to 26, wherein the instructions, when executed by the processor, cause the electronic device to:
   transmit, to the external electronic device, the command for displaying the icon, based on the folding angle being included in the designated range after the electronic device was in a fully folded or fully unfolded state in the state in which the first application is executed.
28. The electronic device of any one of claims 23 to 27,
   wherein the icon is displayed as an upper layer on a screen of the external electronic device, and is for executing an application of the external electronic device for controlling the first application.
29. The electronic device of any one of claims 23 to 28,
   wherein the instructions, when executed by the processor, cause the electronic device to: [515] transmit, to the external electronic device, a command for deleting the icon, based on detecting that the folding angle of the electronic device falls outside the designated range through the at least one sensor after transmitting the command for displaying the icon to the external electronic device.
30. The electronic device of any one of claims 23 to 28,
   wherein the instructions, when executed by the processor, cause the electronic device to:
   transmit, to the external electronic device, a command for deleting the icon, based on the execution of the first application being terminated after transmitting the command for displaying the icon to the external electronic device.
31. The electronic device of any one of claims 23 to 30,
   wherein the instructions, when executed by the processor, cause the electronic device to:
   based on receiving a control command of the first application from the external electronic device through the communication module, perform a function corresponding to the control command.
32. The electronic device of any preceding claim, wherein the electronic device comprises a camera and the first application is for controlling the camera, and wherein the instructions, when executed by the processor, cause the electronic device to:
   transmit, to the external electronic device, a command for executing an application of the external electronic device related to the first application, based on receiving an input for capture through the first application after transmitting the command for displaying the icon to the external electronic device.
33. A wearable electronic device, comprising:
   a communication module;
   a display;
   memory storing instructions; and
   a processor,
   wherein the instructions, when executed by the processor, cause the wearable electronic device to:
      display a home screen or an execution screen of a first application; and
      display, based on receiving a command for displaying an icon related to control of a second application of an external electronic device from the external electronic device connected through the communication module, the icon as an upper layer of the home screen or the execution screen of the first application.
34. The wearable electronic device of claim 33,
   wherein the instructions, when executed by the processor, cause the wearable electronic device to:
   based on a change from the home screen or the execution screen of the first application to another screen in a state in which the icon is displayed, maintain the icon as the upper layer of the changed screen.
35. The wearable electronic device of claim 33 or 34,
   wherein the instructions, when executed by the processor, cause the wearable electronic device to:
   transmit, to the external electronic device, a request for information related to a function being executed on the second application of the external electronic device, based on receiving a user input for selecting the icon;
   receive the information related to the function being executed on the second application of the external electronic device from the external electronic device; and
   display an execution screen of a third application for controlling the second application of the external electronic device based on the received information.
36. The wearable device of any one of claims 33 to 35,
   wherein the instructions, when executed by the processor, cause the wearable electronic device to:
   based on receiving an execution command of a third application for controlling the second application of the external electronic device through the communication module in a state in which the icon is displayed, display an execution screen of the third application for controlling the second application of the external electronic device.
37. The wearable device of any one of claims 33 to 36,
   wherein the instructions, when executed by the processor, cause the wearable electronic device to:
   based on receiving an input to the icon, execute a function corresponding to the input, wherein the input includes one or more of a dragging input, a pinch-in input, a pinch-out input, a flicking input, and an extended touch input.
38. The wearable device of any one of claims 33 to 37,
   wherein the second application relates to control of a camera of an external electronic device.
39. The wearable device of any one of claim 38,
   wherein the instructions, when executed by the processor, cause the wearable electronic device to:
   display a UI for executing a function corresponding to a function of the second application of the external electronic device, wherein the function is a zoom-in or zoom-out operation.
40. The wearable device of any one of claims 33 to 39, further comprising:
   a bezel rotatably disposed along a boundary of the display,
   wherein the instructions, when executed by the processor, cause the wearable electronic device to:
      based on detecting rotation of the bezel, replace the icon with at least one UI related to a function of the second application corresponding to a direction of rotation of the bezel and display the at least one UI.
41. A method for controlling an electronic device, the method comprising:
   executing a first application;
   identifying a mounting state of the electronic device through at least one sensor of the electronic device; and
   based on the identified mounting state and execution of the first application, transmitting, to an external electronic device connected through a communication module of the electronic device, a command for displaying an icon related to control of the first application on a display of the external electronic device.
42. The method of claim 41, further comprising:
   receiving a request for information related to a function being executed on the first application from the external electronic device; and
   transmitting the information related to the function being executed on the first application to the external electronic device, based on receiving the request.
43. The method of claim 41 or 42,
   wherein the electronic device comprises:
   a first housing and a second housing; and
   a hinge rotatably connecting the first housing and the second housing, and the mounting state includes a folding angle between the first housing and the second housing, and wherein transmitting the command to the external electronic device comprises:
   transmitting, to the external electronic device,
   the command for displaying the icon, based on the folding angle being included in the designated range, and
   wherein the icon
   is displayed as an upper layer on a screen of the external electronic device, and is for executing an application of the external electronic device for controlling the first application.
44. The method of any one of claims 41 to 43, where the first application is for control of a camera of the electronic device and the method further comprises:
   transmitting, to the external electronic device, a command for executing an application of the external electronic device related to the first application, based on receiving an input for capture through the first application after transmitting the command for displaying the icon to the external electronic device.
45. A method for controlling an electronic device, the method comprising:
   displaying a home screen or an execution screen of a first application on a display of the electronic device; and
   display, based on receiving a command for displaying an icon related to control of a second application of an external electronic device from the external electronic device connected through a communication module of the electronic device, the icon as an upper layer of the home screen or the execution screen of the first application.
46. A non-transitory computer-readable recording medium storing one or more programs, the one or more programs including instructions enabling an electronic device to execute any of the methods of claims 41 to 45.

## Claims

1. An electronic device, comprising:
a first housing and a second housing;
a hinge rotatably connecting the first housing and the second housing;
a flexible display exposed through a first portion of the first housing and a second portion of the second housing;
at least one sensor;
a camera;
a communication module;
at least one processor including processing circuitry; and
memory storing instructions that, when executed by the at least one processor individually or collectively, cause the electronic device to:
execute a first application for controlling the camera;
identify a folding angle of the electronic device through the at least one sensor; and
based on identifying that the electronic device does not move during a set time after the folding state is included in a designated range in a state in which the first application is executed, transmit, to an external electronic device connected through the communication module, a command for displaying an icon related to control of the first application on a display of the external electronic device.

2. The electronic device of claim 1, wherein the instructions, when executed by the at least one processor individually or collectively, cause the electronic device to:
receive a request for information related to a function being executed on the first application from the external electronic device; and
transmit the information related to the function being executed on the first application to the external electronic device, based on receiving the request.

3. The electronic device of claim 1 or 2, wherein the instructions, when executed by the at least one processor individually or collectively, cause the electronic device to:
transmit, to the external electronic device, the command for displaying the icon, based on the folding angle being included in the designated range after the electronic device was in a fully folded or fully unfolded state in the state in which the first application is executed.

4. The electronic device of any one of claims 1 to 3, wherein the icon is displayed as an upper layer on a screen of the external electronic device, and is for executing an application of the external electronic device for controlling the first application.

5. The electronic device of any one of claims 1 to 4, wherein the instructions, when executed by the at least one processor individually or collectively, cause the electronic device to:
transmit, to the external electronic device, a command for deleting the icon, based on detecting that the folding angle of the electronic device falls outside the designated range through the at least one sensor after transmitting the command for displaying the icon to the external electronic device.

6. The electronic device of any one of claims 1 to 4,
wherein the instructions, when executed by the at least one processor individually or collectively, cause the electronic device to:
transmit, to the external electronic device, a command for deleting the icon, based on the execution of the first application being terminated after transmitting the command for displaying the icon to the external electronic device.

7. The electronic device of any one of claims 1 to 6,
wherein the instructions, when executed by the at least one processor individually or collectively, cause the electronic device to:
based on receiving a control command of the first application from the external electronic device through the communication module, perform a function corresponding to the control command.

8. The electronic device of any one of claims 1 to 7, wherein the instructions, when executed by the at least one processor individually or collectively, cause the electronic device to:
transmit, to the external electronic device, a command for executing an application of the external electronic device related to the first application, based on receiving an input for capture through the first application after transmitting the command for displaying the icon to the external electronic device.

9. A method for controlling an electronic device including a first housing and a second housing and a hinge rotatably connecting the first housing and the second housing, the method comprising:
executing a first application for controlling a camera of the electronic device;
identifying a folding angle of the electronic device through at least one sensor of the electronic device; and
based on identifying that the electronic device does not move during a set time after the folding state is included in a designated range in a state in which the first application is executed, transmitting, to an external electronic device connected through a communication module of the electronic device, a command for displaying an icon related to control of the first application on a display of the external electronic device.

10. The method of claim 9, further comprising:
receiving a request for information related to a function being executed on the first application from the external electronic device; and
transmitting the information related to the function being executed on the first application to the external electronic device, based on receiving the request.

11. The method of claim 9 or 10,
wherein transmitting the command to the external electronic device comprises:
transmitting, to the external electronic device, the command for displaying the icon, based on the folding angle being included in the designated range after the electronic device was in a fully folded or fully unfolded state in the state in which the first application is executed, and
wherein the icon is displayed as an upper layer on a screen of the external electronic device, and is for executing an application of the external electronic device for controlling the first application.

12. The method of any one of claims 9 to 11, wherein the icon is displayed as an upper layer on a screen of the external electronic device, and is for executing an application of the external electronic device for controlling the first application.

13. The method of any one of claims 9 to 12, wherein the instructions, when executed by the processor, cause the electronic device to:
transmit, to the external electronic device, a command for deleting the icon, based on detecting that the folding angle of the electronic device falls outside the designated range through the at least one sensor after transmitting the command for displaying the icon to the external electronic device.

14. The method of any one of claims 9 to 13, further comprising:
transmitting, to the external electronic device, a command for executing an application of the external electronic device related to the first application, based on receiving an input for capture through the first application after transmitting the command for displaying the icon to the external electronic device.

15. A non-transitory computer-readable recording medium storing one or more programs, the one or more programs including instructions enabling an electronic device to execute operations comprising:
executing a first application for controlling a camera of the electronic device;
identifying a folding angle of the electronic device through at least one sensor of the electronic device; and
based on identifying that the electronic device does not move during a set time after the folding state is included in a designated range in a state in which the first application is executed, transmitting, to an external electronic device connected through a communication module of the electronic device, a command for displaying an icon related to control of the first application on a display of the external electronic device.
